**Europäisches Patentamt**

**European Patent Office**

**Office européen des brevets**

(19)

(11) **EP 1 286 149 A1**

(12) **EUROPEAN PATENT APPLICATION**

(43) Date of publication:
26.02.2003 Bulletin 2003/09

(51) Int Cl.7: **G01M 11/00**

(21) Application number: 01306893.7

(22) Date of filing: 14.08.2001

| | |
|---|---|
| (84) Designated Contracting States:<br>**AT BE CH CY DE DK ES FI FR GB GR IE IT LI LU<br>MC NL PT SE TR**<br>Designated Extension States:<br>**AL LT LV MK RO SI**<br><br>(71) Applicant: **UNIVERSITY OF SOUTHAMPTON**<br>**Southampton, Hampshire SO17 1BJ (GB)**<br><br>(72) Inventors:<br>• **Alegria, Carlos, c/o Ctre for Enterprise & Innov.**<br>**Southampton, Hampshire S017 1BJ (GB)** | • **Zervas, Mikhail Nickolaos,**<br>**Ctre.for Enterpr.Innov.**<br>**Southampton, Hampshire S017 1BJ (GB)**<br><br>(74) Representative: **Haines, Miles John et al**<br>**D. Young & Co.**<br>**21 New Fetter Lane**<br>**London EC4A 1DA (GB)** |

(54) **Methods and apparatus for analysing light waveguide couplers**

(57)     Methods for analysing waveguide couplers are non-destructive, and comprise introducing probe light into a coupler; providing a source of perturbing radiation; presenting the coupling region of the coupler to the perturbing radiation to generate a temperature gradient across the waveguide, either from a direction so as to expose one waveguide before another waveguide and perturb the coupling region asymmetrically, or from a direction so as to expose the waveguides together and perturb the coupling region symmetrically; monitoring the power and/or phase of transmitted probe light, and repeating the presenting and monitoring along the length of the coupling region. Theoretical modelling shows that the transmitted probe light contains information from which can be derived the coupling profile, and power evolution and distribution along the coupling region, including location of the 50-50% points.

**Figure 1**

**EP 1 286 149 A1**

**Description**

## BACKGROUND OF THE INVENTION

The invention relates to methods for analysing waveguide couplers, especially but not exclusively optical fibre waveguide couplers, and also to apparatus suitable for carrying out the methods.

Optical waveguide couplers, such as fibre-optic couplers and integrated optic couplers, are widely used in many photonics applications. A common coupler configuration is a four-port device having two input ports and two output ports, with two waveguides in close proximity at a waist, forming a coupling region. Operation relies on distributed coupling between the individual waveguides, which in turn results in a gradual power transfer between optical modes supported by the individual waveguides. Alternatively, the power transfer and cross-coupling at the output ports can be viewed as a result of beating between the eigenmodes of the waveguide structure along the length of the coupling region.

Couplers can be used as power splitters to split the optical power of an optical channel having a particular wavelength. They can also be used to combine or split the power of different channels, corresponding to different wavelengths. Such couplers are wavelength-division-multiplexing (WDM) splitters or combiners. A recent development is the optical add/drop multiplexer (OADM), in which a coupler has a reflective Bragg grating written into the coupler waist, which provides selective adding and dropping of different channels having different wavelengths.

The performance of couplers and coupler-based devices depends on the coupling constants of the coupler, and on the power distribution along the coupling region. The response of OADMs, for example, is critically dependent on the exact positioning of the grating. The grating needs to be accurately positioned at the point along the coupler waist at which the power components in the individual waveguides are equal to each other. Therefore, it is necessary to be able to accurately locate these points so that the gratings can be written in the correct position. With regard to other coupler devices, such as power splitters or WDM couplers, coupler characterisation allows for the identification of manufacturing errors and the optimisation of fabrication procedures.

Methods capable of analysing mode evolution parameters in the coupling region of a coupler would therefore be useful. Useful parameters include power evolution, i.e. power in each component waveguide as a function of position along the coupling region, and coupling constant along the length of the coupling region.

A previously proposed characterisation method measures the coupling length of a coupling region in planar waveguide couplers [1]. In this method, a small differential loss is induced in one of the waveguides, which perturbs the coupler output in a manner which relates to the position of the induced loss. The loss is induced by sliding a drop of mercury along one of the waveguides in the coupling region. The mercury drop has the effect of absorbing a fraction of the light propagating through the waveguide. To prevent loss in the other waveguide, the other waveguide is masked, i.e. covered, with a resist film.

Another previously proposed method for characterising planar waveguide couplers measures the coupler beat period [2]. A 1 μm-thick layer of black ink is spin-coated onto the surface of the planar waveguide structure. The coupling region is then perturbed by directing a light beam of 980 nm radiation from a semiconductor laser diode onto the ink, directly above the location of one of the waveguides. The ink strongly absorbs the 980 nm radiation, and reradiates heat to cause local heating of the waveguide situated directly below the ink.

While of use for characterising planar waveguide couplers, neither method is suitable for characterising fused taper optical fibre couplers. This follows from a fundamental limitation of both methods which is the requirement to selectively perturb only one of the two waveguides in the coupling region. In planar waveguides, there is a distinct geometric separation of the waveguides, whereas this is not generally the case for a fused taper optical fibre coupler produced by melting, and sometimes also twisting. Moreover, the circular cross-sectional shape and smaller cross-sectional dimensions of fibre couplers presents further experimental problems.

Another issue is that both the prior art methods involve undesirable processing of the couplers, namely, the application of resist film or absorptive ink. The characterisation methods are essentially non-destructive, but these additional processing steps increases the risk of coupler damage. Also, while these kinds of processing may be acceptable for planar waveguides, which are relatively robust, they are less suitable for fibre couplers. Fibre couplers are more fragile and prone to failure and damage in processing. Furthermore, fibre couplers generally provide no flat surface for coating which makes it difficult to apply coatings or masking layers.

An improved coupler analysis method and apparatus is therefore desired that can be applied to optical fibre couplers as well as planar waveguide couplers.

## SUMMARY OF THE INVENTION

A first aspect of the present invention is directed to a method of analysing a waveguide coupler having a coupling region with axial length and comprising first and second waveguides extending side-by-side, the method comprising:

introducing probe light into the coupler;
providing a source of perturbing radiation;
presenting the coupling region to the perturbing radiation from a direction that exposes the first waveguide prior to the second waveguide so as to generate a temperature gradient across the coupling region, thereby to perturb the coupling region asymmetrically;
monitoring the probe light transmitted by the coupler; and
repeating the presenting and monitoring steps for a sequence of axial length portions of the coupling region.

A second aspect of the present invention is directed to a method of analysing a waveguide coupler having a coupling region with axial length and comprising first and second waveguides extending side-by-side, the method comprising:

introducing probe light into the coupler;
providing a source of perturbing radiation;
presenting the coupling region to the perturbing radiation from a direction that exposes the first waveguide and the second waveguide together so as to generate a temperature gradient across the coupling region, thereby to perturb the coupling region symmetrically;
monitoring the probe light transmitted by the coupler; and
repeating the presenting and monitoring steps for a sequence of axial length portions of the coupling region.

Theoretical analysis and modelling have shown that waveguide couplers may be analysed and studied by applying perturbations, in this case in the form of temperature gradients, which extend across the whole of the coupling region. The temperature gradient may be oriented in any direction across the waveguide, and the information obtainable depends on the direction. This is a complete departure from the prior art methods, which have assumed that it is necessary to localise the perturbation to only one waveguide out of a pair of waveguides. In fact, application of a perturbation across the whole of the coupling region yields information from which can be derived a greater variety of waveguide characteristics than can be obtained by methods which use a localised perturbation. The theory indicates that symmetric and asymmetric perturbations give information relating to different characteristics of a waveguide, so that the methods can be used selectively or in conjunction to obtain desired results.
The term "waveguide" is to be understood as encompassing coupler geometries beyond those in which individual waveguides are separate and well-defined within the coupling region. For example, in an optical fibre coupler in which the coupling region is formed by fusing fibres together, the waveguides may be distinct. Therefore, "waveguide" applies to all coupler configurations, and should be interpreted in terms of the field intensities of light propagating within the coupler in the absence of physically well-defined waveguides.
In an embodiment of the first aspect of the invention, the perturbation is achieved by directing the perturbing radiation onto the coupler in a direction substantially parallel to a plane containing the waveguides within the coupler and perpendicular to the axial length of the coupling region. This is a convenient arrangement for asymmetric perturbation of a fibre coupler, in which the waveguides are closely spaced.
In an embodiment of the second aspect of the invention, the perturbation according to the second aspect is achieved by directing the perturbing radiation onto the coupler in a direction substantially perpendicular to both a plane containing the waveguides within the coupler and to the axial length of the coupling region.
The methods permit non-destructive testing of a waveguide coupler without any requirement for additional treatment of the coupler before analysis. As there is no requirement for the perturbation to be localised in only one waveguide, the need for protective or absorbent coatings or layers to be applied to the surface of the coupler is avoided. This is especially advantageous in the case of fused taper optical couplers fabricated from optical fibres. The small waist diameters of these couplers makes them fragile and hence prone to failure during post-fabrication treatments such as the application of coatings. However, regardless of the coupler construction, the lack of necessity for such coatings is beneficial in terms of simplification of procedures, reduced cost and reduced risk of damage.
In an embodiment of the first aspect, the transmitted probe light has a power which is monitored during the monitoring step. The transmitted power can be shown to relate to the distribution of the radiation between the waveguides at the axial position at which the perturbation is generated, so that power measurements can yield particular information concerning the operation of the coupler. For example, the monitoring of the power of the transmitted probe light may include noting at which axial length portion or portions the power has a maximum and/or a minimum value. In a coupler having two waveguides, the power maximises when the perturbation is generated at a position at which there is an equal amount of transmitted radiation in each waveguide (50-50% point), and minimises at a position at which all transmitted radiation is contained within one waveguide (0-100% point).

The method may further comprise applying a correction to an axial position of the noted axial length portion or portions in the event that the coupler is a single or multiple full-cycle coupler and the analysis is carried out under conditions in which the coupler is detuned from ideal operation. The new theory developed below shows that the observed power maxima shift from the 50-50% points when a coupler is detuned, but the corrections required to locate the 50-50% points can be readily calculated from formulae.

The detuning may arise from distortion of the axial length of the coupling region, for example because the coupler is stretched during the analysing process, or because of manufacturing errors. The detuning may also arise from the probe light having a wavelength which differs from a wavelength at which ideal operation of the coupler is defined. This wavelength is known as the resonance wavelength, and is the wavelength at which the coupler is designed to give optimum operation. Errors arising from either of types of detuning can be corrected for. In the latter case, the availability of correction formulae means that it is not essential to use a particular probe light wavelength to analyse a particular coupler.

In a further embodiment of the first aspect, the transmitted probe light has a phase which is monitored during the monitoring step. According to the theory, the phase is proportional to the radiation power within a waveguide at the perturbation position. Therefore, a record of the phase variation as a function of the axial position of the perturbation effectively maps the evolution of the power along the waveguide.

In an embodiment of the second aspect, the transmitted probe light has a power which is monitored during the monitoring step. The theory developed below indicates that the variation of the power with the position of the perturbation along the axial length of the coupling region follows the coupling profile.

In either of the first or second aspects, the perturbing radiation may comprise electromagnetic radiation. For example, the source may be a laser. The perturbing radiation is typically absorbed directly by the material of the coupling region so that the material is heated and the temperature gradient is generated, although it is possible to apply a thermally absorbing layer which is heated by the perturbing radiation and reradiates heat to the coupling region. The highly stable outputs which are available from lasers give even and consistent heating. Hence the results of the analysis are not affected by fluctuations in the heating process. Additionally, the wide range of lasers available means that it is typically straightforward to provide a laser that will generate perturbing radiation of a wavelength that is suitably absorbed, whatever the material of the coupler.

Advantageously, the electromagnetic radiation has a wavelength selected to have an absorption length in the coupling region of between 0.1 and 7 times a distance equal to half of the coupling region width. This avoids the requirement for any kind of thermally absorbing layer to be applied to the coupler surface to absorb the perturbation radiation and transfer the heating effect to the coupler material. Additionally, the theory shows that this range of absorption lengths gives an adequate amount of coupling, while offering flexibility in the choice of the source of perturbing radiation.

If the waveguide coupler is an optical fibre waveguide coupler with a coupling region of generally circular cross-section, then its radius comprises the distance equal to half of the coupling region width.

In one embodiment, the coupling region is made from a material comprising silica, and the source is a carbon dioxide laser. The perturbing radiation will therefore have a wavelength of approximately 10 $\mu$m. Silica is widely used as a waveguide material so that the analysis of silica couplers is a common requirement. Radiation with a wavelength of 10 $\mu$m has an absorption length in silica of the order of 5 $\mu$m. A silica fibre coupler may typically have a waist radius of the order of 16 $\mu$m, so that the 10 $\mu$m perturbing radiation will provide a temperature gradient giving a high level of coupling.

In an alternative embodiment, the perturbing radiation may comprise heat radiation, which may be provided by a source which is a resistively heated element. Thus, the perturbation can be generated in circumstances in which a suitable electromagnetic source is not available.

A third aspect of the present invention is directed to a method of analysing a waveguide coupler having a coupling region with axial length and comprising first and second waveguides extending side-by-side, the method comprising:

> introducing probe light into the coupler;
> providing a source of perturbing radiation;
> selecting a first direction from which to present the coupling region to the perturbing radiation;
> presenting the coupling region to the perturbing radiation;
> monitoring the probe light transmitted by the coupler;
> repeating the presenting and monitoring steps for a sequence of axial length portions of the coupling region;
> selecting a second direction from which to present the coupling region to the perturbing radiation; and
> repeating the presenting and monitoring steps for a sequence of axial length portions of the coupling region;

> wherein presenting the coupling region from one of the first direction and the second direction exposes the first waveguide prior to the second waveguide so as to generate a temperature gradient across the coupling region, thereby to perturb the coupling region asymmetrically, and presenting the coupling region from the other of the first direction and the second direction exposes the first and second waveguides together so as to generate a temperature gradient across the coupling region, thereby to perturb the coupling region symmetrically.

By this method, the characteristics of a coupler which can be derived from analyses performed under asymmetric and symmetric perturbation can be determined quickly and in a non-destructive fashion in one procedure. The two perturbations can be achieved by, for example, rotating the coupler by 90° about its longitudinal axis after the first repeating step, or by redirecting the perturbing radiation after the first repeating step so that it is incident on a different side of the coupler.

A fourth aspect of the present invention is directed to a method of analysing a waveguide coupler having a coupling region with axial length and comprising first and second waveguides extending side-by-side, the method comprising:

    introducing probe light into the coupler;
    providing a source of perturbing radiation;
    setting the perturbing radiation to a first power;
    presenting the coupling region to the perturbing radiation from a direction that exposes the first waveguide prior to the second waveguide so as to generate a temperature gradient across the coupling region, thereby to perturb the coupling region asymmetrically;
    monitoring the probe light transmitted by the coupler;
    repeating the presenting and monitoring steps for a sequence of axial length portions of the coupling region;
    setting the perturbing radiation to a second power; and
    repeating the presenting and monitoring steps for a sequence of axial length portions of the coupling region.

This method allows complete analysis of a coupler using asymmetric perturbation only. The theory indicates that a low level of asymmetric perturbation gives a similar effect to a high level of symmetric perturbation. The level of perturbation may be modified by varying the power of the perturbing radiation. The method may be useful in circumstances where it is more convenient to modify the perturbation radiation power level than to rotate the coupler (for example, if the coupler is very fragile).

A fifth aspect of the present invention is directed to apparatus for analysing a waveguide coupler, comprising:

    a source of probe light operable to emit probe light for introducing into a waveguide coupler;
    a mount for holding a waveguide coupler;
    a source of perturbing radiation operable to direct light radiation having a component of at least 2 $\mu$m in wavelength onto a waveguide coupler held in the mount with a direction of incidence;
    a scanning arrangement operable to present a sequence of axial length portions of the coupling region of a waveguide coupler held in the mount to the perturbing radiation; and
    a detector operable to monitor probe light transmitted by a waveguide coupler held in the mount.

The mount and/or the light source are preferably configured to allow a waveguide coupler held in the mount to be rotated relative to the direction of incidence of the perturbing radiation, thereby to switch between symmetric and asymmetric perturbation geometries.

The source of perturbing radiation may have a component of at least 3, 4, 5, 6, 7, 8, 9 or 10 $\mu$m in wavelength. Generally, the wavelength of the perturbing radiation will be chosen having regard to the absorption properties of the material making up the waveguide coupler. As discussed elsewhere in this document, the perturbing radiation is preferably selected to have an absorption length in the material of the coupling region that is comparable to, e.g. within one order of magnitude of, the cross-sectional dimensions of the coupler waist.

## BRIEF DESCRIPTION OF THE DRAWINGS

For a better understanding of the invention and to show how the same may be carried into effect reference is now made by way of example to the accompanying drawings in which:

    Figure 1 shows a schematic diagram of an apparatus according to an embodiment of the present invention;
    Figure 2 shows a schematic diagram of a four-port optical waveguide coupler;
    Figure 3(a) shows a schematic diagram of the coupler of Figure 2 with an induced perturbation;
    Figure 3(b) shows schematic illustrations of four aspects of the induced perturbation of Figure 3(a);
    Figure 4 is a schematic depiction of even/odd eigenmode beating and total power evolution along an unperturbed full-cycle waveguide coupler;

Figure 5 is a schematic representation of scattering processes and coupling mechanisms induced in a coupler by an external refractive index perturbation;

Figure 6 shows plots of the calculated relative variation of coupling coefficients $k_{ij}$ with absorption length $1/\alpha$ of the perturbing radiation;

Figure 7 shows plots of the calculated relative variation of coupling coefficients $k_{ij}$ with coupler waist radii r;

Figure 8 shows plots of the calculated variation of coupling coefficients $k_{ij}$ with perturbing laser power $P_{CO2}$, for asymmetric perturbation;

Figure 9 shows the results of a numerical simulation of the power perturbation P of an ideal uniform full cycle coupler under asymmetric perturbation as a function of position z along the coupler;

Figure 10 shows the results of a numerical simulation of the power perturbation P of an uniform full cycle coupler with taper regions under asymmetric perturbation as a function of position z along the coupler;

Figure 11 shows the results of a numerical simulation of the power perturbation P of an uniformly tapered full cycle coupler with a small taper ratio under asymmetric perturbation as a function of position z along the coupler;

Figure 12 shows the results of a numerical simulation of the power perturbation P of an uniformly tapered full cycle coupler with an extreme taper ratio under asymmetric perturbation as a function of position z along the coupler;

Figure 13 shows the results of a numerical simulation of the power perturbation P of a non-uniform coupler under asymmetric perturbation as a function of position z along the coupler;

Figure 14 shows the results of a numerical simulation of the power perturbation P of full cycle couplers under various amounts of phase detuning caused by different coupler lengths under asymmetric perturbation as a function of position z along the coupler;

Figures 15 (a)-(c) show the results of a numerical simulation of the power perturbation P of full cycle couplers under asymmetric perturbation as a function of position z along the coupler, for a phase matched condition, Figure 15 (a), and positive and negative phase detuning, Figures 15 (b) and (c), the phase change being caused by use of different probe light wavelengths;

Figure 16 shows the results of a numerical simulation of the power perturbation P of half-cycle couplers as a function of position z along the coupler, for a phase matched condition, Figure 16 (a), and positive and negative phase detuning, Figures 16 (b) and (c), the phase change being caused by use of different probe light wavelengths;

Figure 17 shows the results of a numerical simulation of the phase perturbation θ of a full cycle coupler under asymmetric perturbation as a function of position z along the coupler;

Figure 18 shows the experimental results of analysis a half-cycle coupler under symmetric and asymmetric perturbation, as plots of power perturbation P against position z along the coupler;

Figure 19 shows the experimental results of analysing a half-cycle coupler under asymmetric perturbation using different probe light wavelengths, as plots of power perturbation P against position z along the coupler; the graph inset shows the measured spectral response (power P against wavelength λ) of the coupler for the different probe light wavelengths;

Figure 20 shows the experimental results of analysing a full cycle coupler under symmetric and asymmetric perturbation, as plots of power perturbation P against position z along the coupler;

Figure 21 shows the experimental results of analysing a full cycle coupler under asymmetric perturbation using different powers of perturbing radiation, as plots of power perturbation P against position z along the coupler; and

Figure 22 shows the experimental results of analysing a complex non-uniform coupler under asymmetric and symmetric perturbation, as plots of power perturbation P against position z along the coupler.

## DETAILED DESCRIPTION

### APPARATUS AND METHOD

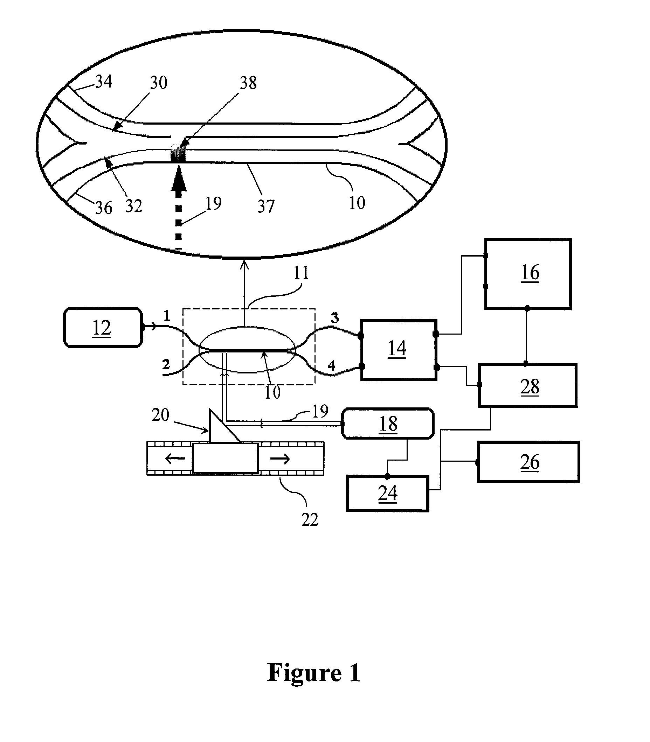

Figure 1 is a schematic diagram of an embodiment of an apparatus for analysing a waveguide coupler.

A waveguide coupler 10 has the form of a four-port optical fibre coupler comprising two silica optical fibres fused to create a coupling region (defined in the Figure by the oval outline). The four ports of the coupler 10 are labelled 1, 2, 3 and 4. The coupler 10 is arranged on a mount 11 to hold it in a defined position and alignment.

A laser diode 12 is provided to generate probe light having a wavelength of 1.55 μm. The probe light is launched into port 1 of the coupler 10. A detector 14 is arranged to detect the probe light which exits from ports 3 and 4 after being transmitted by the coupler 10. The detector 14 may detect the power or the phase of the probe light. Any conventional detectors and detection techniques are suitable. Specifically, lock-in techniques may be used for noise reduction. A data acquisition card 16 is arranged to receive signals from the detector 14, for data storage and signal processing.

A second laser 18 is provided to generate a beam of perturbing radiation 19. The laser 18 is a carbon dioxide

($CO_2$) laser to provide perturbing radiation at a wavelength of 10.6 µm. An angled mirror 20 is mounted on a translation stage 22. The mirror 20 directs the beam 19 of perturbing radiation onto the coupling region of the coupler 10 so that it exposes the coupler in a line or stripe extending across the coupling region. The position of the mirror 20 can be scanned by the translation stage 22 in a direction parallel to the length of the coupling region, so that the beam of perturbing radiation 19 can be scanned along the length of the coupling region.

Operation of the $CO_2$ laser is modulated by a controller 24 in response to a signal from a signal generator 26. The signal is also sent to a lock-in amplifier 28 which is in communication with the detector 14 and the acquisition card 16. In this way, the transmitted probe light can be detected and amplified in phase with the perturbing radiation, to improve the signal-to-noise ratio.

The enlarged section of Figure 1 shows the coupling region 37 of the coupler 10 in more detail. The two fibres 34, 36 of the coupler 10 each have a core 30, 32. The cores 30, 32 are brought into close proximity in the coupling region 37 where the fibres 34, 36 are fused. The beam of perturbing radiation 19 is incident on the side of the coupling region 37, and induces a perturbation 38 in a localised volume of the coupling region 37.

The analysis method is carried out by first launching probe light continuously into the coupler 10. The beam of perturbing radiation 19 is then directed onto the coupling region 37 at a particular location. The perturbing radiation is absorbed by the material forming the coupling region and heats the material so that a temperature gradient is established across the coupling region. This is represented in Figure 1 by the shading of the perturbation 38. Denser shading schematically indicates a higher temperature. The heating causes a localised change in the refractive index of the material, so that a refractive index gradient is induced through the coupling region. This has the effect of changing the way in which the probe light propagates along the coupling region, and hence how much probe light exits the two ports 3 and 4. The probe light is detected by the detector 14. The response of the detector is stored on the acquisition card 16 as a function of the position along the coupling region 37 at which the perturbation was induced. The signal-to-noise ratio of the detector response is improved by the use of the signal generator 26 and the lock-in amplifier 28 because the modulation of the perturbing radiation modulates the refractive index change which in turn modulates the probe light.

The beam of perturbing radiation 19 is then scanned to a new position along the coupling region 37 by using the translation stage 22 to move the mirror 20, and the probe light is again recorded by the detector as a function of perturbation position. This process is repeated until as much of the coupling region 37 as is of interest has been subjected to the perturbing radiation.

A theoretical study and modelling of the perturbation process shows that the probe light is affected by the perturbation in such a way as to yield information relating to the distribution of transmitted power between the waveguides 34, 36 of the coupler 10, the evolution of transmitted power along the coupling region 37 and the profile of the coupling coefficient along the coupling region 37. Thus the characteristics of the coupler 10 can be readily ascertained from a non-destructive analysis. The theory is presented in full later, followed by experimental results.

In Figure 1, the perturbing radiation is shown as being directed onto the side of the coupling region, that is, in a direction which is substantially parallel to the plane in which the waveguides 34, 36 are located and perpendicular to the optical axis of the coupling region. This arrangement means that the waveguide 36 is exposed to the perturbing radiation prior to the waveguide 34 so that the waveguides experience different amounts of heating and hence different levels of perturbation. This is an "asymmetric" perturbation viewed geometrically, and, more fundamentally, is also asymmetric with respect to the symmetry of eigenmode power distribution through the coupling region.

Alternatively, the perturbing radiation can be directed onto the coupling region in a direction which is substantially perpendicular to the plane of the waveguides and perpendicular to the optical axis. This configuration exposes both waveguides to the perturbing radiation together so that the waveguides experience the same amount of heating and the same level of perturbation. This is a "symmetric" perturbation, and is also symmetric with respect to the symmetry of eigenmode power distribution through the coupling region. Symmetric perturbation produces no result if used on a coupling region which is uniform along its length, but does yield information for non-uniform couplers such as a fibre coupler which has a tapered region at each end of the coupling region. A non-uniform coupler is one which has variation in coupling constant along the coupling region. This variation may arise, for example, from non-uniformities in the coupling region width or waveguide spacing, and may be intentional or due to manufacturing errors.

Asymmetric and symmetric perturbation are able to yield information relating to different characteristics of the coupler. Therefore, a considerable amount of information can be obtained if the method includes first detecting probe light as a function of perturbation position for asymmetric (or symmetric) perturbation, and then repeating this for symmetric (or asymmetric) perturbation. This can be simply achieved by rotating the coupler by 90° between sets of measurements. Alternatively, a mirror arrangement may be used to direct the perturbing radiation onto a different part of the coupling region. An asymmetric perturbation permits the mapping of the power evolution along the length of the coupling region, and in particular, allows location of the position or positions at which the power is equally split between the waveguides (50-50% point). A symmetric perturbation allows the mapping of the coupling profile or coupling constant along the length of the coupling region.

Additionally, it can be shown that, under asymmetric perturbation, different levels of perturbation have different effects, giving different information. The level of perturbation depends on the size of the induced change in refractive index. The perturbation level can be modified by alteration of the power of the incident perturbing radiation, which changes the amount of heating. A low level of asymmetric perturbation has a similar effect on the transmitted probe light as a higher level of symmetric perturbation. Therefore, a waveguide coupler may be analysed by inducing an asymmetric perturbation with perturbing radiation at a first power level and detecting the power of the transmitted probe light, followed by inducing an asymmetric perturbation with perturbing radiation at a second power level and detecting the power of the transmitted probe light. This has the experimental advantage of avoiding having to alter the direction of incidence of the perturbing radiation during scanning in order to obtain the information usually obtained with higher intensity symmetric perturbation. The disadvantage is that the low intensity perturbation needed to yield this information may give rise to signal-to-noise problems.

Lasers are suitable as a source of probe light. The theory shows that the accuracy of some results of an analysis can be improved by using probe light of a wavelength equal or close to the resonant wavelength of the coupler. The resonant wavelength is the wavelength of light for which the coupler is designed to operate most efficiently. However, the theory also shows that it is possible to apply corrections to results in the event that the probe light differs from the resonant wavelength. Therefore, the use of probe light which matches the resonant wavelength is not essential. A tunable laser may be used to provide the probe light, so that the apparatus can be readily modified for the analysis of many couplers.

Alternative arrangements may be used to induce the temperature gradient, in place of the $CO_2$ laser. All that is required is a source of perturbing radiation which will produce localised heating in the coupling region. Therefore, other lasers or sources of electromagnetic radiation are suitable. Alternatively, heat radiation can be used as the perturbing radiaiton. To provide this, an electrical heating wire may be scanned across the coupler, the temperature of the wire being controlled by adjustment of electric current applied to it. However, this technique tends to be more difficult to control than using a laser, owing to oscillations in the electric current as well as heat convection losses which can influence the temperature of the wire and the surrounding air and hence affect the induced perturbation. Therefore, use of a laser or other directional light source to induce the heating is preferred.

The apparatus described above features a $CO_2$ laser as a source of 10.6 $\mu$m perturbing radiation used to analyse a silica coupler. Radiation at a wavelength of 10.6 $\mu$m has an absorption length in silica of approximately 1 to 6 $\mu$m. A typical fibre coupler waist radius may be 16 $\mu$m. According to the theory, the effect of the induced perturbation on the probe light is optimised for absorption lengths that are comparable to the coupling region radius, so that a $CO_2$ laser is a good choice for the analysis of silica couplers. Other wavelengths of perturbing radiation can be selected as appropriate depending on the absorption properties of the material of the coupler. The absorption length, $1/\alpha$ (where $\alpha$ is the linear absorption coefficient of a material at a particular wavelength) is defined as the length of absorbing material in which the power of incident radiation is reduced to 1/e of its original value. The use of a wavelength which is substantially absorbed within a length comparable to the coupler size means that there is no requirement for a thermal absorbing layer as has been proposed in the prior art [2].

The methods are applicable to many types of waveguide coupler. They are especially suitable for the analysis of fused fibre couplers, as the small waist size of these couplers makes them prone to damage by any method which requires the application of masking or absorbing layers to the coupling region surface. Additionally, the methods apply a perturbation across the whole width of the coupling region, so there is no requirement to isolate the effect in just one waveguide. This is impractical in a fused fibre coupler, in which the boundary between waveguides is indistinct. However, the method may also be applied to planar waveguides, including those with a buried core. Selection of a perturbing wavelength which is absorbed at an appropriate depth in the coupling region material allows the temperature gradient to be induced at the correct location, in accordance with the perturbation required.

In the case of a fibre coupler in which the coupling region is formed by twisting the individual fibres before fusing them (such as a null coupler), the method should preferably be modified so that the scanning of the perturbing radiation follows the twist along the coupling region. This may be achieved by rotating the coupler during the scan. This is necessary to ensure that either a symmetric or asymmetric perturbation is maintained throughout the scan. If the scan does not follow the twist, the perturbation will alter between symmetric and asymmetric during the course of the scan. This will give convolved data, rendering subsequent interpretation of the analysis more complicated.

THEORETICAL ANALYSIS OF THE METHOD

Optical waveguide couplers are generally formed by bringing two or more waveguides (e.g. planar, ridge, or diffused waveguides, or optical fibres) into close proximity so that optical power can be exchanged between them through evanescent field interaction.

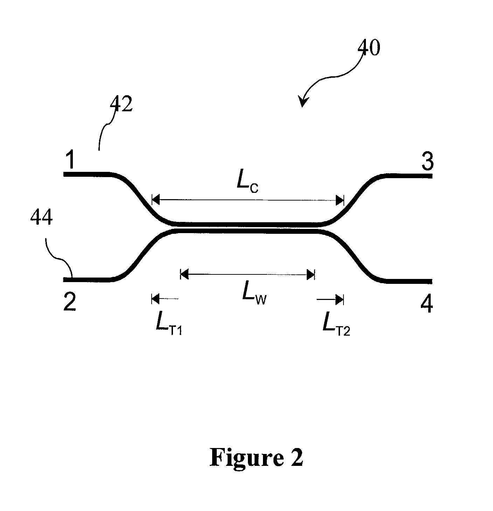

Figure 2 shows a schematic diagram of a generic four-port (2x2) coupler 40. The ports are labelled 1, 2, 3 and 4, with 1 & 2 being input ports and 3 & 4 being output ports. The coupler 40 comprises two waveguides 42, 44 which, in use, exchange powers over a coupling region $L_C$, which comprises a coupler waist $L_W$ and two taper regions $L_{T1}$, $L_{T2}$, one on each side of the coupler waist. The taper regions are adiabatic in order to avoid higher-order and radiation mode excitation that can contribute to losses. The coupling process along the taper regions, which can be described by a varying coupling constant, is non-uniform and accounts for a substantial part of the total exchanged power. The taper regions should, therefore, be taken into account when considering practical coupled devices. The waist region, on the other hand, is generally assumed to be uniform and is described by a fixed coupling constant. However, in practice, the waist can show sizeable non-uniformities that may need to be accounted for in order to accurately describe the device performance. The degree of non-uniformity tends to depend on the fabrication process used to make the coupler.

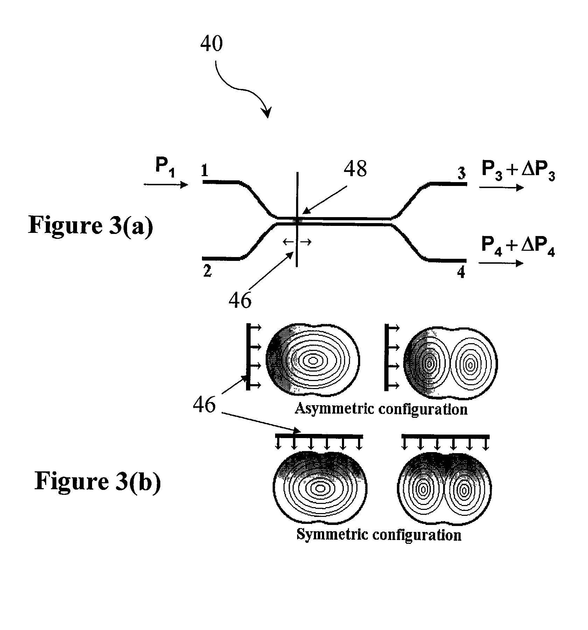

Figures 3(a) and 3(b) show schematic diagrams of a coupler with an induced perturbation, and of the nature of the perturbation. These illustrate the principle of operation of the methods of the present invention. Figure 3 (a) shows a coupler 40 of the type shown in Figure 2. Light of a suitable wavelength, having power or phase $P_1$, is launched into input port 1 (although input port 2 may be used). A perturbing element 46 (such as the $CO_2$ laser in Figure 1) induces a local perturbation 48 in the coupling region of the coupler 40. The change in power or phase $\Delta P$ caused by the perturbation 48 is monitored at one or both of the output ports (3 and 4). The power or phase exiting the output ports can be designated $P_3+\Delta P_3$ and $P_4+\Delta P_4$. The local perturbation 48 is induced non-destructively by a temperature gradient across the coupling region.

Figure 3(b) shows the effect of the perturbation 48 induced by the perturbing element 46 in more detail. The Figure shows the coupling region in cross-section, supporting either an even eigenmode (left hand cross-sections) or an odd eigenmode (right hand cross-sections). The perturbation 48 can be asymmetric (upper cross-sections) or symmetric (lower cross-sections) with respect to the power distribution of the even and odd eigenmodes, i.e. with respect to the power distribution across the coupling region. As indicated above, the different applied perturbations can provide information about different coupler parameters.

The symmetric and assymmetric perturbation methods described above are based on development of a new theoretical analysis which is now described. The theoretical analysis is based on coupled mode theory.

Consider the 2x2 coupler shown schematically in Figure 2, having four ports 1, 2, 3 and 4. Input port 1 and output port 3 are at either end of waveguide 1 and input port 2 and output port 4 are at either end of waveguide 2. When probe light is launched into port 1, the normalised field amplitudes of the even ($A_e$) and odd ($A_o$) eigenmodes at the coupler input (z=0) can be approximated by:

$$A_e(0) = \frac{A_1(0) + A_2(0)}{\sqrt{2}} \; ; A_o(0) = \frac{A_1(0) - A_2(0)}{\sqrt{2}} \qquad (1)$$

where $A_1(0)$ and $A_2(0)$ are the normalised amplitudes of the fields launched initially at the two input ports 1 and 2, respectively. For single port excitation, as shown in Figure 2, $A_1(0)=1$ and $A_2(0)=0$ and, through Equation (1), $A_e(0)= A_o(0)=1/\sqrt{2}$. Therefore, light launched into one of the input ports of a 2x2 coupler excites equally the two lowest-order (even and odd) eigenmodes along the coupling region. The two eigenmodes propagate adiabatically along the entire coupling region.

The propagating total electric field at any point along the coupler is given by:

$$E_t(z) = E_e(z) + E_o(z) = A_e(z)e^{-i\int_0^z \beta_e(\zeta)d\zeta} + A_o(z)e^{-i\int_0^z \beta_o(\zeta)d\zeta} \qquad (2)$$

During adiabatic propagation, the even and odd eigenmodes retain their amplitude ($A_e(z)=A_c(0)$ and $A_o(z)=A_o(0)$) and only change their relative phase. This results in spatial beating along the coupler waist and power redistribution between the two individual waveguides comprising the optical coupler. The peak field amplitudes for each individual waveguide, along the coupling region, can be approximated by:

$$E_1(z) = \frac{E_e(z) + E_o(z)}{\sqrt{2}} = \cos\left(\frac{1}{2}\phi(z)\right)e^{-i\frac{1}{2}\int_0^z[\beta_e(\zeta)+\beta_o(\zeta)]d\zeta} \tag{3}$$

$$E_2(z) = \frac{E_e(z) - E_o(z)}{\sqrt{2}} = -i\sin\left(\frac{1}{2}\phi(z)\right)e^{-i\frac{1}{2}\int_0^z[\beta_e(\zeta)+\beta_o(\zeta)]d\zeta}$$

where

$$\phi(z) = \phi_{eo}(z) = \int_0^z \Delta\beta_{eo}(\zeta)d\zeta = \int_0^z [\beta_e(\zeta) - \beta_o(\zeta)]d\zeta$$

is the relative accumulated phase difference between the even and odd eigenmodes. $\beta_c$ and $\beta_o$ are the propagation constants of the even and odd eigenmodes, respectively. The corresponding normalised peak powers carried by the individual waveguides 1 and 2 are given by $P_{1(2)} = |E_{1(2)}|^2$, namely:

$$P_1(z) = \cos^2\left(\frac{1}{2}\phi(z)\right)$$
$$P_2(z) = \sin^2\left(\frac{1}{2}\phi(z)\right) \tag{4}$$

At the points along the coupler where $\phi$ is zero or a multiple of $2\pi$, the total power is concentrated predominantly around waveguide 1 ($P_1$=1 and $P_2$=0). At the points along the coupler where $\phi$ is a multiple of $\pi$ the total power is concentrated predominantly around waveguide 2 ($P_1$=0 and $P_2$=1). Finally, at the points where $\phi$ is a multiple of $\pi/2$, the total power is equally split between the two waveguides ($P_1$=$P_2$).

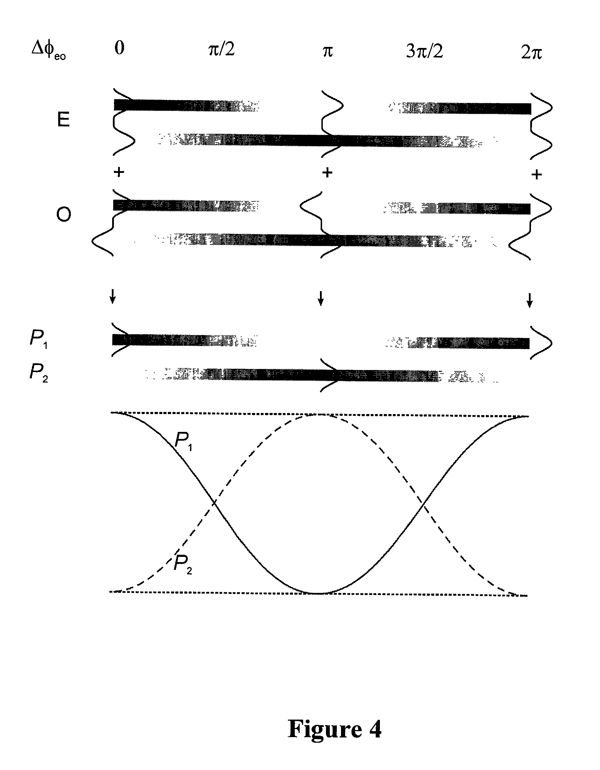

Figure 4 shows, schematically, the even/odd eigenmode beating and total power evolution along an unperturbed single cycle full-cycle coupler (a coupler in which $\phi$ changes from 0 to $2\pi$ along the length of the coupling region). The changing value of $\phi$ is shown across the top of the Figure. In the central part of the Figure, the evolutions of the even eigenmode E and the odd eigenmode O are shown. The superposition of the eigenmodes determines the distribution of power between the waveguides 1 and 2, which support powers $P_1$ and $P_2$. This is shown at the bottom of the Figure, in the form of a graph. In the case of a non-uniform coupler waist, the non-uniformities are considered to be adiabatic so that no power exchange takes place between the two local eigenmodes and/or the radiation modes.

However, in the presence of a local non-adiabatic (symmetric or asymmetric) externally induced refractive index perturbation, at a given distance $z_0$ along the coupling region, the otherwise uncoupled even and odd eigenmodes scatter light into each other and perturb their amplitudes $A_e$ and $A_o$. The refractive index perturbation may be induced, for example, by establishing a thermal gradient across the coupling region. The interaction between the two propagating eigenmodes can be described by the following coupled-mode equations:

$$\frac{dA_e}{dz} = -ik_{ee}A_e - ik_{eo}A_o e^{i\Delta\beta \cdot z} \tag{5}$$
$$\frac{dA_o}{dz} = -ik_{oo}A_o - ik_{oe}A_e e^{-i\Delta\beta \cdot z}$$

where $\Delta\beta=\beta_e-\beta_o$. The overall coupling process is characterised by four parameters, namely $k_{ee}$, $k_{oo}$, $k_{eo}$ and $k_{oe}$. The parameters $k_{ee}$ and $k_{oo}$ are self-coupling coefficients, describing the scattering of each mode into itself, and result in a modification of the mode propagation constant locally. The parameters $k_{eo}$ and $k_{oe}$, on the other hand, are cross-coupling coefficients, describing the scattering of each mode into the other, and give the interaction and power exchange between the even and odd modes.

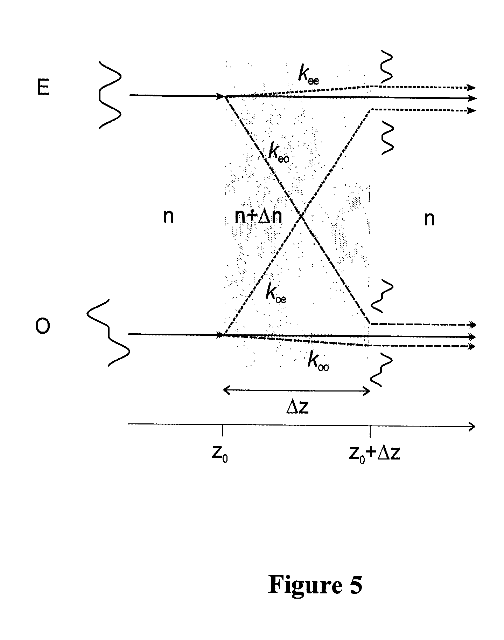

Figure 5 shows a schematic representation of the scattering process and coupling mechanism induced by an external refractive index perturbation. The refractive index of the coupling region is defined as n, and the perturbation is defined as $\Delta$n, so that the refractive index in the volume in which the perturbation is induced (marked by the shaded area in the Figure) is n+$\Delta$n. The perturbation begins at a position $z_0$ and extends along the axial length of the coupling region for a distance $\Delta$z. The even eigenmode E and the odd eigenmode O are shown as receiving contributions arising from both the self-coupling coefficients $k_{ee}$ and $k_{oo}$, and the cross-coupling coefficients $k_{eo}$ and $k_{oe}$.

The coupling coefficients can be expressed as:

$$k_{ee}(z) = \frac{\omega}{4}\int\Delta\varepsilon(x,y,z)E_e^*(x,y)E_e(x,y)dxdy$$

$$k_{oo}(z) = \frac{\omega}{4}\int\Delta\varepsilon(x,y,z)E_o^*(x,y)E_o(x,y)dxdy \tag{6}$$

$$k_{eo(oe)}(z) = \frac{\omega}{4}\int\Delta\varepsilon(x,y,z)E_{e(o)}^*(x,y)E_{o(e)}(x,y)dxdy$$

where $\Delta\varepsilon = \varepsilon_0\Delta n^2 \approx 2\varepsilon_0 n\Delta n$ is the dielectric permittivity perturbation. When the refractive index perturbation is uniform across the waist cross-section or symmetric with respect to the waist centre, the cross-coupling coefficients are zero ($k_{eo}= k_{oe}=0$). When the refractive index perturbation is antisymmetric with respect to the waist centre, the self-coupling coefficients are zero ($k_{ee}= k_{oo}=0$). In the general case of an asymmetric perturbation, all coupling coefficients are non-zero. Solving the coupled-mode equations (5) along the local perturbation length $\Delta z$ gives the following expressions for the amplitudes of the perturbed even and odd mode fields:

$$A_e(z_0+\Delta z) = \left[\left(\cos(s\Delta z) - \frac{i\sigma}{s}\sin(s\Delta z)\right)A_e(z_0) - \frac{ik_{eo}}{s}\sin(s\Delta z)A_o(z_0)\right]e^{i\frac{\Delta\beta'}{2}\Delta z} \tag{7}$$

$$A_o(z_0+\Delta z) = \left[-\frac{ik_{eo}}{s}\sin(s\Delta z)A_e(z_0) + \left(\cos(s\Delta z) + \frac{i\sigma}{s}\sin(s\Delta z)\right)A_o(z_0)\right]e^{-i\frac{\Delta\beta''}{2}\Delta z}$$

where

$$s = (k_{eo}^2 + \sigma^2)^{1/2}, \quad \sigma = \frac{\Delta\beta}{2} + k_{diff}, \quad k_{diff} = \frac{k_{ee} - k_{oo}}{2}, \quad \bar{k} = \frac{k_{ee} + k_{oo}}{2}$$

$$\frac{\Delta\beta'}{2} = \frac{\Delta\beta}{2} - \bar{k}, \quad \frac{\Delta\beta''}{2} = \frac{\Delta\beta}{2} + \bar{k}, \quad \Delta\beta=\beta_e-\beta_o$$

The propagation along an unperturbed coupler region, extending from $z_1$ to $z_2$, can be described by:

$$\begin{bmatrix} E_e(z_2) \\ E_o(z_2) \end{bmatrix} = \begin{bmatrix} \alpha_e(z_1,z_2) & 0 \\ 0 & \alpha_o(z_1,z_2) \end{bmatrix} \cdot \begin{bmatrix} E_e(z_1) \\ E_o(z_1) \end{bmatrix} \tag{8}$$

where

$$\alpha_{e(o)}(z_1, z_2) = e^{-i \int_{z_1}^{z_2} \beta_{e(o)}(z)dz} \tag{9}$$

From Equation (7), on the other hand, the propagation along the perturbed region can be put in propagation matrix form as:

$$\begin{bmatrix} E_e(z_0 + \Delta z) \\ E_o(z_0 + \Delta z) \end{bmatrix} = \begin{bmatrix} T_{11} & T_{12} \\ T_{21} & T_{22} \end{bmatrix} \cdot \begin{bmatrix} E_e(z_0) \\ E_o(z_0) \end{bmatrix} \tag{10}$$

where

$$T_{11} = \left[ \cos(s\Delta z) - i\frac{\sigma}{s}\sin(s\Delta z) \right] e^{-i\overline{\beta}\Delta z}$$

$$T_{12} = T_{21} = -i\frac{k_{eo}}{s}\sin(s\Delta z)e^{-i\overline{\beta}\Delta z} \tag{11}$$

$$T_{22} = \left[ \cos(s\Delta z) + i\frac{\sigma}{s}\sin(s\Delta z) \right] e^{-i\overline{\beta}\Delta z}$$

where $\overline{\beta} = \frac{\beta_e + \beta_o}{2} + \frac{k_{ee} + k_{oo}}{2}$ is the average of the two perturbed propagation constants. The even and odd eigenmode fields at the coupler output (where $z=L$, $L$ being the length of the coupler) are $E_e(L,z_0)$ and $E_o(L,z_0)$, respectively, with the perturbation applied at $z=z_0$. They are obtained in terms of the input fields $E_e(0)= A_e(0)$ and $E_o(0)= A_o(0)$ by multiplying the three pertinent propagation matrices and can be expressed as:

$$\begin{bmatrix} E_e(L,z_0) \\ E_o(L,z_0) \end{bmatrix} = \begin{bmatrix} \alpha_e(z_0 + \Delta z, L) & 0 \\ 0 & \alpha_o(z_0 + \Delta z, L) \end{bmatrix} \cdot \begin{bmatrix} T_{11} & T_{12} \\ T_{21} & T_{22} \end{bmatrix} \cdot$$

$$\begin{bmatrix} \alpha_e(0,z_0) & 0 \\ 0 & \alpha_o(0,z_0) \end{bmatrix} \cdot \begin{bmatrix} A_e(0) \\ A_o(0) \end{bmatrix} \tag{12}$$

The transfer matrix [T] of the perturbation can be further simplified by disentangling the coupling event from the propagation process over the perturbation length $\Delta z$. The perturbation transfer matrix is then approximately expressed as the product of a localised and instantaneous coupling matrix and a simple propagation matrix as follows:

$$\begin{bmatrix} T_{11} & T_{12} \\ T_{21} & T_{22} \end{bmatrix} = \begin{bmatrix} C_{11} & C_{12} \\ C_{21} & C_{22} \end{bmatrix} \begin{bmatrix} e^{-i(\beta_e + k_{ee})\Delta z} & 0 \\ 0 & e^{-i(\beta_o + k_{oo})\Delta z} \end{bmatrix} \tag{13}$$

where

$$C_{11} = C_{22} = \cos(|k_{eo}|\Delta z) \text{ and } C_{12} = C_{21} = -\, i\, \sin(|k_{eo}|\Delta z)$$

The error involved in the approximation of Equation (13) is $O(\Delta^3)$ and is negligible when the perturbation length $\Delta z$ is very small. Substituting Equation (13) into Equation (12) the perturbed fields $E_e(L,z_0)$ and $E_o(L,z_0)$ of the even and odd modes, respectively, at the coupler output can be calculated with the perturbation at $z_0$. Using Equation (3) the fields of the outputs of the corresponding individual waveguides $E_1(L,z_0)$ and $E_2(L,z_0)$ can be calculated. After simple mathematic manipulations, the powers at the outputs of the corresponding individual waveguides $P_{1(2)}(L,z_0)=|E_{1(2)}(L,z_0)|^2$ are expressed as:

$$P_1(L,z_0)=\cos^2\left(\frac{1}{2}\phi_p\right)\cos^2(|k_{eo}|\Delta z) + \sin^2(|k_{eo}|\Delta z)\cos^2\left(\phi_1 - \frac{1}{2}\phi_p\right) \qquad (14a)$$

$$P_2(L,z_0)=\sin^2\left(\frac{1}{2}\phi_p\right)\cos^2(|k_{eo}|\Delta z) + \sin^2(|k_{eo}|\Delta z)\sin^2\left(\phi_1 - \frac{1}{2}\phi_p\right) \qquad (14b)$$

where $\phi_p = \phi(L)+\Delta\phi_p$ is the total perturbed phase difference between even and odd modes, expressed as the sum of the total phase difference between the even and odd modes of the unperturbed coupler

$$\phi(L) = \int_0^L \Delta\beta(z)dz$$

and perturbation term $\Delta\phi_p = (k_{ee}-k_{oo})\Delta z$. The term

$$\phi_1 = \int_0^{z_0} \Delta\beta(z)dz$$

is the accumulated phase difference up to the perturbation point and it is therefore a function of $z_0$. For a uniform coupler, $\phi_1$ is the only $z_0$-dependent term. Therefore, by monitoring the power variation as the perturbation is scanned along the coupler length, it is possible to extract useful information about the coupler waist characteristics and the power evolution along the coupling region.

Two different types of perturbation can be considered, namely:

*Symmetric types*, where the perturbation is applied symmetrically with respect to power distribution of the even and odd eigenmodes. The lower part of Figure 3(b) shows a specific arrangement of symmetric perturbation. From Equations (6), it can be deduced that in this case only the self-coupling coefficients $k_{ee}$ and $k_{oo}$ are non-zero while the cross-coupling coefficients $k_{eo}$ and $k_{oe}$ are zero.

*Asymmetric types,* where the perturbation is applied asymmetrically with respect to power distribution of the even and odd eigenmodes. The upper part of Figure 3(b) shows a specific arrangement of asymmetric perturbation. In this case, both the self-coupling and cross-coupling coefficients are non-zero.

Considering further the situation of a symmetric perturbation, under the conditions of symmetric perturbation, Equations (14) become:

$$P_1(L) = \cos^2\left[\frac{1}{2}\phi_p(L)\right] = \cos^2\left\{\frac{1}{2}\left[\phi(L) + \Delta\phi_p\right]\right\} \qquad (15)$$

$$P_2(L) = \sin^2\left[\frac{1}{2}\phi_p(L)\right] = \sin^2\left\{\frac{1}{2}\left[\phi(L) + \Delta\phi_p\right]\right\}$$

In the case of an ideal multiple-cycle coupler of length $L_0$, the unperturbed total phase difference $\phi(L_0)$ is given by $\phi(L_0)=m\pi$ where $m=1,2,3,...$ In practice, however, couplers are usually slightly detuned from the ideal length and have a length $L$ such that $L \neq L_0$ and $|L-L_0| \ll 1$. This can arise from manufacturing errors or from distortion of the coupler in use. The unperturbed total phase difference $\phi(L)$, in this case, is given by $\phi(L) = \phi(L_0)+\Delta\phi_L = m\pi+\Delta\phi_L$, where $m=1,2,3,...$ and

$$\Delta\phi_L = \int_{L_0}^{L}\Delta\beta(z)dz \ll \pi.$$

For multiple cycle full-cycle couplers, in which $m$ is even, in the limit of small perturbation $[(k_{ee}-k_{oo})\Delta z \ll 1]$, equations (15) become:

$$P_1(L) \approx 1 - \left(\frac{\Delta\phi_L + \Delta\phi_p}{2}\right)^2 \approx 1 - \frac{1}{4}\Delta\phi_L^2 - \frac{1}{2}\Delta\phi_L(k_{ee} - k_{oo})\Delta z \qquad (16)$$

$$P_2(L) \approx \left(\frac{\Delta\phi_L + \Delta\phi_p}{2}\right)^2 \approx \frac{1}{4}\Delta\phi_L^2 + \frac{1}{2}\Delta\phi_L(k_{ee} - k_{oo})\Delta z$$

For multiple cycle half-cycle couplers, in which $m$ is odd, the expressions for $P_1(L)$ and $P_2(L)$ are interchanged.

From Equations (16), it can be seen that, in the case of symmetric perturbation, the power $P_2$ at the output of waveguide 2 (output port 4) has two contributions. In addition to the initial residual power, there exists another term that depends on the difference between the perturbation-induced self-coupling coefficients, and is owing to manufacturing tolerances and errors resulting in a small detuning $\Delta\phi_L \neq 0$. Although the first contribution is fixed and independent of perturbation, the second contribution depends on the overlap between the profile of the perturbation induced by the perturbation element and the even and odd modes of the coupler waist. This overlap can be shown to depend on the coupler-waist radius and the perturbation penetration depth (see later). Under symmetric perturbation, the power variation at either output port (port 3 or port 4) can be used to map the coupling region outer diameter variation. It can, therefore, provide useful information about the taper-region shape and waist uniformity. In the case of non-uniform couplers, it can also provide the exact profile of the entire coupling region. In case of a perfect coupler ($\Delta\phi_L=0$), the required information is given by the quadratic term $[(k_{ee}-k_{oo})\Delta z]^2$. Note that, for an unperturbed full cycle coupler, all power should exit by the output port of waveguide 1 (port 3), but the induced perturbation causes power "leakage" at the output port of waveguide 2 (port 4).

Considering now the case of asymmetric perturbation, in the general case, all coupling coefficients are non-zero. For a slightly detuned coupler with $m$ even (full cycle coupler), and an asymmetric perturbation applied at a position $z_0$ along the coupling region, Equations (14) take the form:

$$P_1(z_0, L) = \cos^2\left(\frac{1}{2}\Delta\phi\right)\cos^2\left(|k_{eo}|\Delta z\right) + \sin^2\left(|k_{eo}|\Delta z\right)\cos^2\left(\phi_1(z_0) - \frac{1}{2}\Delta\phi\right) \tag{17}$$

$$P_2(z_0, L) = \sin^2\left(\frac{1}{2}\Delta\phi\right)\cos^2\left(|k_{eo}|\Delta z\right) + \sin^2\left(|k_{eo}|\Delta z\right)\sin^2\left(\phi_1(z_0) - \frac{1}{2}\Delta\phi\right)$$

where $\Delta\phi=(\Delta\phi_L+\Delta\phi_p)$ is the total detuning due to length mismatch and the perturbation. For a small total detuning ($\Delta\phi<<\pi$) and a small perturbation ($|k_{eo}|\Delta z\approx 0$), $P_2$ can be approximated by:

$$P_2(z_0, L) \approx \left(\frac{\Delta\phi}{2}\right)^2 + \left(|k_{eo}|\Delta z\right)^2 \sin^2\left(\phi_1(z_0) - \frac{\Delta\phi}{2}\right) \tag{18}$$

The first term of Equation (18) is the residual power at output port 4 due to the small total phase detuning and a non-zero difference between the symmetric perturbation coefficients ($k_{ee}$-$k_{oo}$). This term is similar to the one appearing under the symmetric perturbation of the coupler (Equation (16)). The second term depends on the relative position of the applied perturbation (through $\phi_1(z_0)$) and the square of perturbation strength (through ($|k_{eo}|\Delta z)^2$). From Equation (18) it is observed that for a small phase detuning the power evolution along the coupler is followed.

It can be shown that the leakage power $P_2$ acquires maximum values at positions $z_{0n}$ along the coupling region, for which:

$$\phi_1(z_{0n}) = \frac{1}{2}\Delta\phi + (2n+1)\frac{\pi}{2} \qquad n = 0,1,2... \tag{19}$$

The total number of successive maxima is determined by the relation $0\leq\phi_1(z_{0n})\leq m\pi$ where $m$=2,4,6... Equation (19) is also valid for multiple cycle half-cycle couplers where m is odd. In this case, however, the expressions for output powers $P_1$ and $P_2$ in Equations (17) are interchanged. For the related ideal coupler (where $\Delta\phi$=0), the corresponding $P_2$ maxima positions $z'_{0n}$ fulfil the relation $\phi_1(z'_{0n})=(2n+1)\pi/2$. It can be shown that at these positions the total power is split equally between the waveguides, so that $P_1 = P_2$ (50-50% points).

The leaking power $P_2$ acquires minimum values at the points where the perturbation term in (18) vanishes, i.e. when:

$$\phi_1(z_0) = \frac{1}{2}\Delta\phi + n\pi \qquad n = 0,1,2... \tag{20}$$

For an ideal coupler ($\Delta\phi$=0), at these minimum points the power is concentrated in only one of the waveguides (0-100% points).

As mentioned, couplers are frequently non-ideal, so that $\Delta\phi\neq 0$. From equation (19) it can be deduced that the presence of a finite phase detuning ($\Delta\phi\neq 0$) introduces an error in the determination of the position of the 50-50% points. Two causes of phase detuning are considered:

*Maintaining the coupler strength and varying the coupler length:*

For uniform couplers the error in the determination of the 50-50% points of the coupler at resonance (i.e. when the coupler is operated with its ideal, resonance, wavelength) owing to a phase detuning $\Delta\phi$ originated by varying the coupler length to L+$\Delta$L while maintaining the strength of the coupler is given by:

$$\Delta z_n = z_{0n} - z'_{0n} = \frac{\Delta\phi}{2\Delta\beta} = \frac{\Delta\phi_L + \Delta\phi_p}{2\Delta\beta} \tag{21}$$

where $z_{0n}$ are the actual 50-50% points of the ideal coupler and $z'_{0n}$ are the maxima of the non-ideal asymmetric

perturbation. The error $\Delta z_n$ can be minimised by using probe light with a wavelength close to the resonance wavelength of the coupler, and using a very small perturbation. For example, for a full-cycle coupler ($m$=2) with 20 dB extinction ratio ($\Delta\phi_L$=0.2) and a length of 30 mm, the error in the 50-50% point positions is $\approx$-0.5 mm.

*Varying the coupler strength and maintaining the coupler length:*

This situation arises when analysing the coupler at a different wavelength (test wavelength, $\lambda_t$) from the resonance wavelength, $\lambda_0$. For full-cycle couplers, at the test wavelength $\lambda_t$, then $\Delta\beta_t$=2$\pi$($n_e$-$n_o$)/$\lambda_t$. At the resonance wavelength $\lambda_0$, then $\Delta\beta_0$=2$\pi$($n_e$-$n_o$)/$\lambda_0$. Assuming that $\lambda_t$ is very close to $\lambda_0$, then ($n_e$-$n_o$) can be considered constant. The coupler phase displacement from the resonance is given by $\Delta\phi$=($\Delta\beta_t$-$\Delta\beta_0$)L where L is the length of the coupler. For a test wavelength of $\lambda_t$<$\lambda_0$, then $\Delta\phi$>0, and if $\lambda_t$>$\lambda_0$, then $\Delta\phi$<0. If the coupler is analysed at the resonance wavelength then $\lambda_t$=$\lambda_0$ and $\Delta\phi$=0. It can be shown that, for a uniform full-cycle coupler the error in the 50-50% points due to a phase detuning $\Delta\phi$ is given by:

$$\Delta z_{(n=0)} = z_{0(n=0)} - z'_{0(n=0)} = -\frac{\Delta\phi}{4\Delta\beta_t} \tag{22}$$

$$\Delta z_{(n=1)} = z_{0(n=1)} - z'_{0(n=1)} = +\frac{\Delta\phi}{4\Delta\beta_t}$$

where n=0,1 correspond to the first and second 50-50% point respectively and $z_{0n}$ corresponds to the position of the 50-50% point of the ideal coupler and $z'_{0n}$ are the maxima of the non-ideal asymmetric perturbation. It is interesting to note that the 0-100% point of the coupler corresponds to the minimum of the perturbation independently of the phase detuning $\Delta\phi$. When calculating the error between the local minimum of the asymmetric perturbation given by Equation (20) and the position of the 0-100% point of the full-cycle coupler it is found that:

$$\Delta z_{n=1} = z_{0n=1} - z'_{0n=1} = 0 \tag{23}$$

For a uniform half-cycle coupler the error in the 50-50% points due to a phase detuning $\Delta\phi$ is given by:

$$\Delta z_{n=0} = z_{0n=0} - z'_{0n=0} = 0 \tag{24}$$

Therefore, for a half-cycle coupler the maximum of the leaking power due to an asymmetric perturbation is a marker of the 50-50% point of the coupler independently of the phase detuning of the coupler i.e., independently of the test wavelength.
The discussion up to now has considered the effect of perturbations on the power of the transmitted probe light. Asymmetric perturbation of the coupler will also affect the phase of the electric field of the transmitted probe light at the output ports. The phase varies with the perturbation position along the coupler waist. The output phase is given by $\theta_i$ = arctan(Im($A_i$)/Re($A_i$)), where $A_i$($i$ = 1,2) is the field amplitude at either output port. From Equation (10), and for a perfect full-cycle coupler (m=2, $\Delta\phi$=0) the phase change at the output port of the perturbed coupler relative to the unperturbed coupler is given by:

$$\theta_1(z_0) = \arctan\{-\tan(|k_{eo}|\Delta z)\cdot\cos[\phi_1(z_0)]\} \tag{25}$$

For small perturbations ($k_{eo}\Delta z \approx 0$) the phase difference is approximated by:

$$\theta_1(z_0) \approx -2\,|\,k_{eo}\,|\,\Delta z \cos^2\!\left(\frac{1}{2}\phi_1(z_0)\right) + |\,k_{eo}\,|\,\Delta z \tag{24}$$

Recalling Equations (4) it can then be deduced that, with the perturbation applied at position $z_0$, the relative phase change of the field amplitude at output port 3 is proportional to the individual waveguide power $P_1(z_0)$. Therefore, the change in the relative phase of the field at the coupler output maps directly the power evolution along the corresponding individual waveguide. This information can be used to calculate the coupling constant distribution $k(z)$ along the coupling region. For a perfect full-cycle coupler ($\Delta\phi=0$) no light arrives at port 4 and therefore the phase displacement cannot be measured at that port.

In the case of non-ideal full-cycle couplers with a slight phase detuning (m=2, $\Delta\phi{\neq}0$) the phase change at the output port due to the asymmetric perturbation of the coupler is given by:

$$\theta_1(z_0) \approx -\frac{\Delta\phi}{2} + |\,k_{eo}\,|\,\Delta z - 2\,|\,k_{eo}\,|\,\Delta z \cos^2\!\left(\frac{1}{2}\phi_1(z_0)\right) \tag{27}$$

$$\theta_2(z_0) \approx \frac{\Delta\phi}{2}\left(1 + \frac{1}{|\,k_{eo}\,|\,\Delta z \sin(\phi_1(z_0))}\right)$$

Therefore, for full-cycle couplers with a small phase detuning, the phase change at output port 3 continues to map the power evolution along the coupler. However, the phase change at output port 4 does not provide a direct measurement of the coupler power evolution, as shown in Equations (27).

## NUMERICAL SIMULATIONS

### *OVERLAP INTEGRALS BETWEEN THE COUPLER EIGENMODES AND THE PERTURBATION PROFILE*

As discussed above, analysis of couplers using symmetric and asymmetric perturbations allows the location of the 50-50% power points of the coupler and the measurement of the beat length and any radius non-uniformities in the taper region profile. The perturbations are induced by a perturbing element providing perturbing radiation, such as external heating elements or illumination by light sources (white light source, blackbody radiation source, $CO_2$ laser, He-Ne laser, laser diodes, light emitting diodes, superluminescent diodes etc). The various sources will induce different perturbation profiles and therefore will have a different overall effect.

In order to investigate the effectiveness of the perturbation a simplified phenomenological model has been used to calculate the relative magnitude of the coupling coefficients $k_{ij}$ (i,j=e,o) under varying perturbing conditions. According to the model, a highly fused coupler waist is approximated by a circular cross-section (in the xy plane) silica structure with a negligible core. The coupler modes are approximated by the lowest order modes ($LP_{01}$ and $LP_{11}$) of this multimode cladding-air structure. The coupler is perturbed locally by radiation incident from a first side so as to give a symmetric perturbation or from a second side so as to give an asymmetric perturbation. The absorption of the radiation generates instantaneous heating of the structure that follows an exponential decay ($\sim e^{-\alpha x}$) through the waist. Therefore an exponential temperature gradient is induced. This results in a local change of the refractive index of the structure by $\Delta n = (\partial n/\partial T)\Delta T$. For fused silica, the coefficient $\partial n/\partial T \approx 1.1{\times}10^{-5}$ K$^{-1}$. For $CO_2$ laser radiation, a typical value for the absorption length is $1/\alpha \approx 1$ µm - 6 µm, where $\alpha$ is the linear absorption coefficient.

The perturbation is quantified by calculating the overlap integrals $OI_{ij}$ (i,j=e,o) between the temperature distribution and the eigenmode profiles. The overlap integrals are defined by:

$$OI_{ij} = \iint_A E_i E_j f(x, y) dA, \qquad i, j = e, o$$

where $f(x,y)$ is the normalised temperature profile. The distribution $f(x,y)$ is proportional to the perturbed index profile and, therefore, the overlap integrals $OI_{ij}$ (i,j=e,o) are proportional to the coupling coefficients $k_{ij}$ (i,j=e,o).

First consider the effect of the radiation penetration depth on the coupling coefficient magnitude, for symmetric and asymmetric perturbation. The coupler waist radius is considered to be 16 μm, which is typical of the fibre coupler devices commonly fabricated with a flame brush technique.

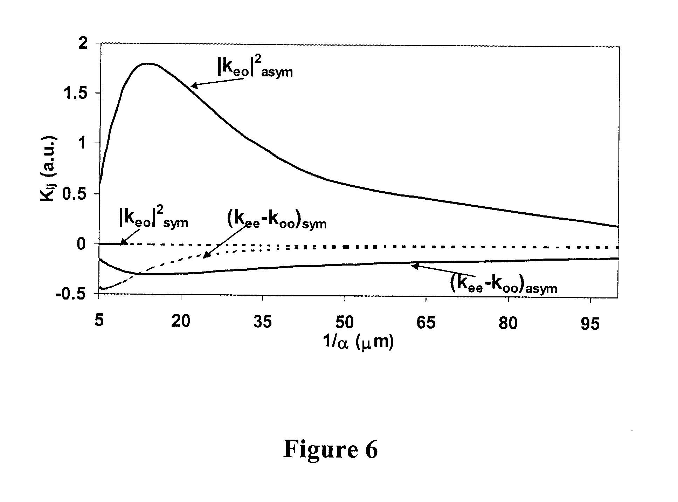

Figure 6 shows plots of the relative variation (in arbitrary units) of the coupling coefficient $k_{eo}$ and the corresponding difference in coefficients $k_{ee}$-$k_{oo}$ ($k_{ij}$) for different radiation absorption lengths ($1/\alpha$). The coupler waist radius is 16 μm. The dashed lines indicate symmetric perturbations and the solid lines indicate asymmetric perturbations. As previously described, under pure symmetric perturbation the perturbed output power is proportional to the difference $k_{ee}$-$k_{oo}$ (see Equation (16)), while under pure asymmetric perturbation the perturbed power is proportional to $k_{eo}^2$ (see Equation 18). Figure 6 indicates that both the asymmetric perturbation $k_{eo}$ and the symmetric perturbation $k_{ee}$-$k_{oo}$ are maximised for a range of absorption lengths between about 10 μm and 17 μm. Therefore, the perturbation method is optimised for these radiation absorption lengths, for the given coupler waist radius of 16 μm. Figure 6 also indicates that asymmetric perturbations result in a finite $k_{ee}$-$k_{oo}$, which nevertheless, is appreciably smaller than the accompanying $k_{eo}$. Under symmetric perturbation, as expected, $k_{eo}$ is negligible for every absorption length. Also, as the absorption length is increased appreciably (so that it is much larger than the coupler radius) the perturbation becomes increasingly uniform through the entire coupler waist cross-section and all the parameters tend to zero, under either perturbation. This suggests that it is advantageous to use a perturbation radiation with an absorption length not significantly greater than the coupler waist size, so that the perturbation effect is optimised. For example, a helium-neon laser emits light at 633 nm which has an absorption length in silica of approximately 1 m, so is not suitable as perturbing radiation for the analysis of silica waveguides without the use of a thermally absorbing layer.

Now consider the effect of the coupler waist radius on the coupling coefficient magnitude, for symmetric and asymmetric perturbation. The perturbation radiation absorption length is taken to be 5 μm, typical for 10 μm $CO_2$ laser radiation in silica.

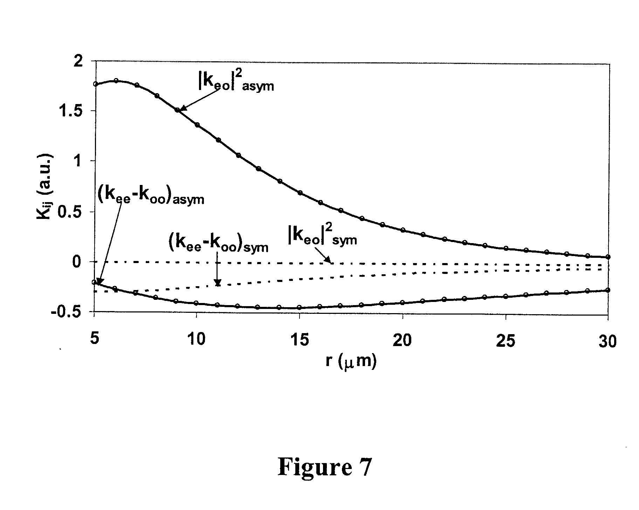

Figure 7 shows plots of the relative variation (in arbitrary units) of the coupling coefficient $k_{eo}$ and the corresponding difference in coefficients $k_{ee}$-$k_{oo}$ ($k_{ij}$) for different coupler waist radii r. The dashed lines indicate symmetric perturbations and the solid lines indicate asymmetric perturbations. The asymmetric perturbation $k_{eo}$ and the symmetric perturbation $k_{ee}$-$k_{oo}$ are maximised for a coupler waist radius of about 5μm, which is comparable to the given absorption length of 5 μm. Figure 7 also shows that for small coupler waist radii, asymmetric perturbations result in $k_{ee}$-$k_{oo}$ being appreciably smaller than the accompanying $k_{eo}$. However, for larger coupler-waist radii, the difference $k_{ee}$-$k_{oo}$ becomes comparable with and finally equal to $k_{eo}$ and the simple analytic formula of Equation (18) is not valid any more. In this case, the power perturbation at the coupler output should be calculated using Equations (14a) and (14b). Again, under symmetric perturbation, $k_{eo}$ is zero for every coupler waist radius.

Furthermore, Figure 7 shows that, under symmetric perturbation, the difference $k_{ee}$-$k_{oo}$ changes quasi-linearly with the coupler waist radius. From Equation (16), it is then clear that the output power perturbation will follow closely the coupler waist outer dimensions as the perturbing laser is scanned along the coupling region. The output power variation can therefore provide a reliable mapping of the entire coupling region giving a reasonably accurate estimation of the coupler uniformity.

Under asymmetric perturbation, the coupling coefficient $k_{eo}$ changes appreciably with the coupler waist radius. From Equation (18), it can be deduced that as the perturbation is scanned along the coupling region, in addition to the expression in parentheses of the second term, the perturbation output power is appropriately weighted by the varying $k_{eo}^2$ coefficient. In addition, if $k_{ee}$-$k_{oo}$ is larger or comparable to $k_{eo}^2$ (for large coupler waist radii or under weak $CO_2$ laser power), the significant $k_{ee}$-$k_{oo}$ term in Equation (18) should also be taken into account.

A particularly significant point to note from the models presented in Figures 6 and 7 is the relative sizes of the coupler radius and the perturbation radiation absorption length. In Figure 6, the coefficients are maximised for absorption lengths of about 10 to 17 μm when the coupler radius is 16 μm, i.e. when the radius is equal to or very similar to the absorption length. In Figure 7, the coefficients are maximised for coupler radii of about 5 μm when the radiation absorption length is also 5 μm, once again, when the radius is equal to or very similar to the absorption length. Naturally, it is desirable to maximise the coefficients to optimise signal strength, but Figures 6 and 7 indicate that meaningful results can still be obtained when the coupler radius and the radiation absorption length differ somewhat, provided that a sufficient signal-to-noise ratio can be obtained.

The model deals with a coupler of circular cross-section having a waist radius, but the conclusions drawn from Figures 6 and 7 are equally applicable to couplers of other shapes. Therefore, in terms of the half-width of the coupling region rather than a radius, the absorption length of the perturbing radiation in the coupling region may be between 0.1 and 7 times the half-width of the coupling region in different examples. To increase the size of the coupling coefficients, the range of absorption lengths can be reduced to, for example, between 0.3 and 3 times the coupling region half-width, or between 0.4 and 2.2 times the coupling region half-width, or between 0.5 and 1.8 times the coupling region half-width, or between 0.56 and 1.5 times the coupling region half-width, or between 0.6 and 1.2 times the coupling region half-width, or between 0.8 and 1 times the coupling region half-width.

In some coupler geometries, the waveguides are not located centrally in the coupling region. A planar waveguide, for example, may have waveguides situated at or just below a surface in one dimension, but far from a surface in an orthogonal dimension. For the analysis of such couplers, the relevant distance to be considered when selecting perturbing radiation with an appropriate absorption length is not necessarily the half-width of the coupling region, but the distance between the waveguide or waveguides and the coupling region surface through which the perturbing radiation is incident. In all cases, regardless of coupler geometry, the absorption properties of all materials through which the perturbing radiation passes should be considered. For example, the coupler may have a cladding material which is transparent to the perturbing radiation so that the cladding thickness can be ignored when considering the absorption length relative to the depth of the waveguide below the coupler surface. Therefore, the term "coupling region half-width" and corresponding terms are to be interpreted in accordance with the geometry of the coupler being analysed.

Overall, it can be concluded that useful results can be obtained if the absorption length of the perturbing radiation in the coupling region is preferably comparable to the half-width of the coupling region.

The model also considers the effect of different incident radiation powers on the magnitude of the coefficients $k_{ee}$-$k_{oo}$ and $k_{eo}^2$ under asymmetric perturbation.

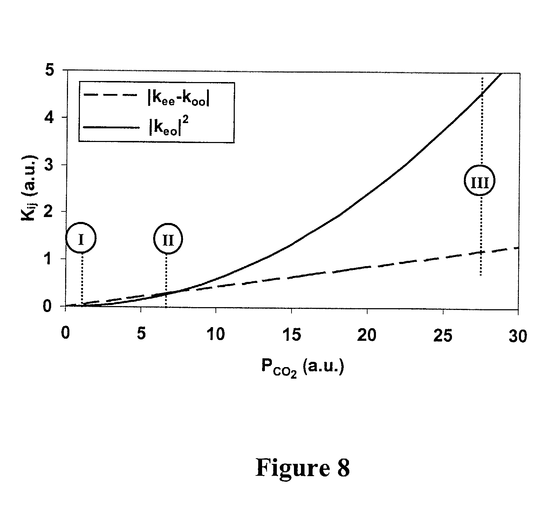

Figure 8 shows plots of the variation of the coupling coefficients $k_{ij}$ for asymmetric perturbations induced by different perturbing laser powers $P_{CO2}$. The solid line shows the variation of $k_{eo}^2$ and the broken line shows the variation of $k_{ee}$-$k_{oo}$. It is assumed that there is a linear dependence of the refractive index with the power of the incident radiation and therefore, the coupling coefficients ($k_{ee}$-$k_{oo}$) and $k_{eo}$ are proportional to the power of the incident radiation. The absorption length of the incident radiation was 5 $\mu$m ($CO_2$ laser radiation) and the coupler waist radius was 16 $\mu$m. For high powers of the $CO_2$ laser (Region III in Figure 8), $k_{ee}$-$k_{oo}$<<$k_{eo}^2$ and the asymmetric perturbation of the coupler can be used to locate the 50-50% points of the coupler. For small values of the $CO_2$ laser power where $k_{ee}$-$k_{oo}$>>$k_{eo}$ or $k_{ee}$-$k_{oo}$≈$k_{eo}$ (Regions I and II in Figure 8 respectively) the first term in Equation (18) should be taken into account.

This behaviour indicates that by varying the incident power of the perturbing radiation, the coupler can be completely analysed under asymmetric perturbation. High incident powers permit the location of the 50-50% points and the measurement of the power distribution, whereas low incident powers produce the same effect as a symmetric perturbation, so that the coupling profile can be mapped.

*COUPLER PERTURBATION MODELLING*

In order to verify the approximate results given by Equations (16) and (18), an exact model based on the transfer-matrix method was implemented. The entire coupler was divided in M uniform sections and the transfer matrices corresponding to each section were calculated using Equations (8) to (10). The transfer matrix of the entire coupler was then calculated by multiplying the individual transfer matrices. No simplifications to the perturbation matrix were made. In this model, any coupling profile $k(z)$ can be introduced and both symmetric and asymmetric perturbations can be accounted for by modifying the values of the coupling coefficients $k_{eo}$, $k_{ee}$ and $k_{oo}$. A number of different coupler configurations were considered with coupling coefficient profiles of varying complexity. The modelling is intended to demonstrate that for all coupling coefficient geometries, an asymmetric perturbation scanned along the coupling region always provides the 50-50% power points. The following simulations consider an ideal asymmetric perturbation with only the perturbation coefficient $k_{eo}$ being non-zero.

*Uniform Coupler*

The first simulation refers to an ideal uniform coupler with constant coupling coefficient throughout the coupling region. The total coupler region length is $L$=30 mm. The total phase difference between the even and odd eigenmodes is $\phi(L)$=2$\pi$ (full-cycle coupler).

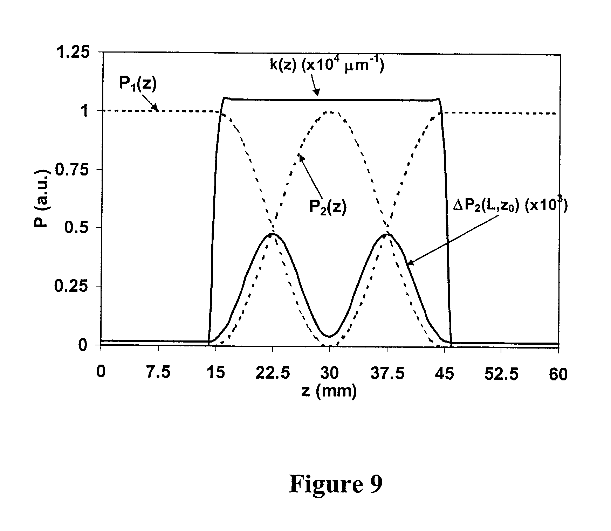

Figure 9 shows the power evolution of $P_1(z)$ and $P_2(z)$ of each "individual" waveguide (dashed lines) and the output power perturbation $\Delta P_2$(L) (solid line) expressed as normalised power P, as functions of the perturbation position z along the coupling region. The coupling coefficient profile k(z) is also superimposed for better visualisation.

These results illustrate that the positions along the coupler region where the output power perturbation $\Delta P_2$

(L) is maximised correspond to the points where the power is equally distributed between the two "individual" waveguides ($P_1$(z)=$P_2$(z)=0.5). For an ideal uniform coupler of length $L$, these points are situated at $L$/4 and 3$L$/4. The simulation results show that the 50-50% points are at 7.5 mm from the centre of the coupler, as expected.

*Uniform Coupler with Two Tapered Regions*

The second simulation refers to a more realistic coupler profile with a taper region on either side of the uniform coupler waist. Each taper region is 10 mm long and the uniform waist region is 30 mm long. The total coupler length is therefore $L$=50 mm. Again, the total phase difference between the even and odd eigenmodes was $\phi$(L)=2$\pi$ (full-cycle coupler). This coupling profile is typical of couplers fabricated with the flame brush technique.

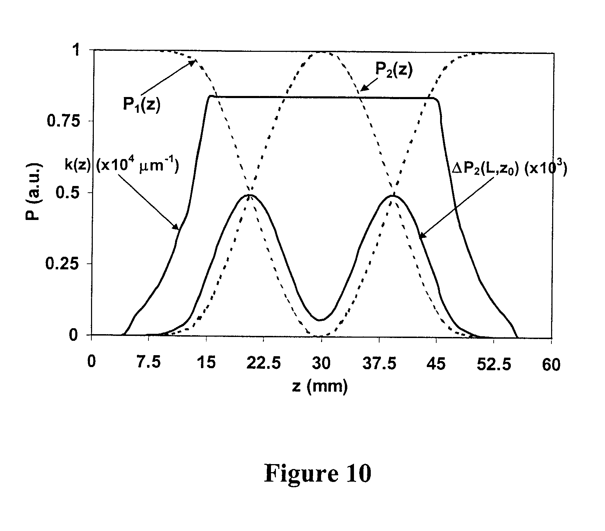

Figure 10 shows the power evolution of $P_1$(z) and $P_2$(z) of each "individual" waveguide (dashed lines) and the output power perturbation $\Delta P_2$(L) (solid line) expressed as normalised power P, as functions of the perturbation position z along the coupling region. The coupling coefficient profile k(z) is also superimposed for better visualisation.

These results show that the effect of the taper regions on the power distribution along the coupler is to move the 50-50% points away from the centre of the coupler. This is caused by some coupling between the modes in the taper regions. The results also illustrate that the maxima of the output perturbation power coincide with the 50-50% points, which are placed 9.5 mm away from the centre of the coupler.

*Uniformly Tapered Couplers*

Examples of non-uniform couplers were also modelled. A coupler having a uniformly tapered coupling coefficient profile with a small taper ratio was studied. This type of profile can be encountered in real fused couplers and may be caused by temperature non-uniformities along the fused waist or by other experimental inaccuracies. A uniformly tapered coupler with an extreme taper ratio was also studied. In both cases, the total coupler length was $L$=30 mm and the total phase difference between the even and odd eigenmodes was $\phi(L)$ =2$\pi$(full-cycle coupler).

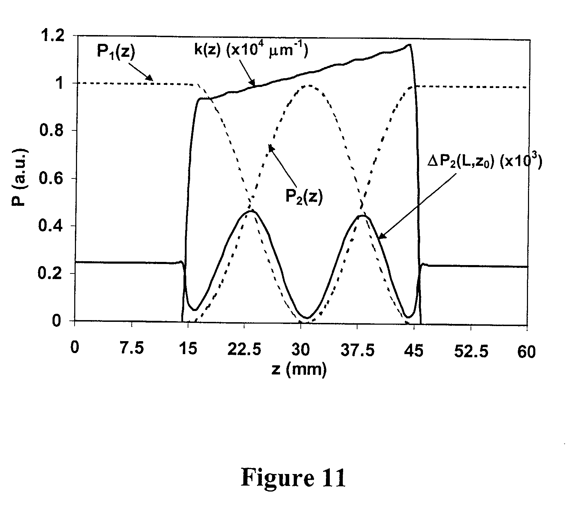

Figure 11 relates to the coupler with the small taper ration, and shows the power evolution of $P_1$(z) and $P_2$(z) of each "individual" waveguide (dashed lines) and the output power perturbation $\Delta P_2$(L) (solid line) expressed as normalised power P, as functions of the perturbation position z along the coupling region. The coupling coefficient profile k(z) is also superimposed for better visualisation.

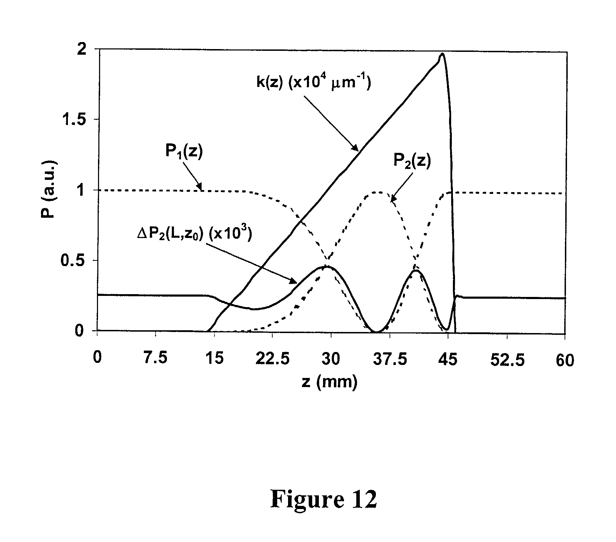

Figure 12 relates to the coupler with the extreme taper ration, and shows the power evolution of $P_1$(z) and $P_2$(z) of each "individual" waveguide (dashed lines) and the output power perturbation $\Delta P_2$(L) (solid line) expressed as normalised power P, as functions of the perturbation position z along the coupling region. The coupling coefficient profile k(z) is also superimposed for better visualisation.

Despite the different individual power distributions, in both cases the output power perturbation maxima coincide with the points along the coupler where the power is split equally between the two "individual" waveguides ($P_1$(z)=$P_2$(z)=0.5).

*Non-Uniform Coupler (Mach-Zehnder Interferometer)*

The final simulation concerns a complex non-uniform coupling structure comprising two weakly-coupled regions and an intermediate uncoupled region. The length of each weakly-coupled region is $L_0$=10 mm and the total coupler length $L_c$=30 mm. The phase difference between the even and odd eigenmodes along each weakly-coupled region is

$$\int_0^{L_0} \Delta\beta(z)dz = \frac{\pi}{2}.$$

The total phase difference between the even and odd eigenmodes is

$$\phi(L_c) = \int_0^{L_c} \Delta\beta(z)dz = \pi$$

(half-cycle coupler). Since the coupler is a half-cycle long, the perturbation is measured at the output of waveguide 1.

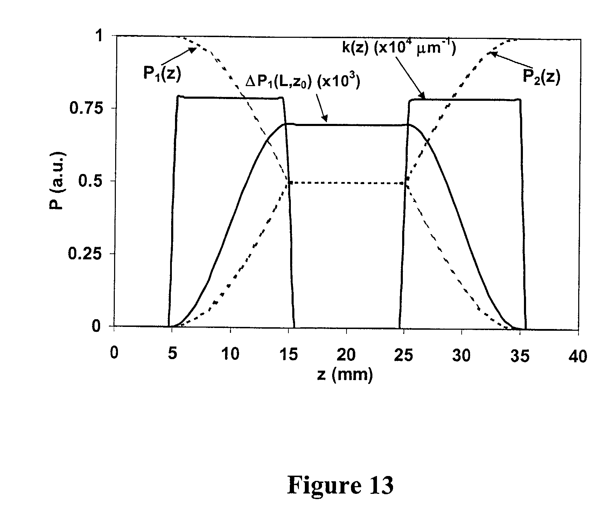

Figure 13 shows the power evolution of $P_1(z)$ and $P_2(z)$ of each "individual" waveguide (dashed lines) and the output power perturbation $\Delta P_2(L)$ (solid line) expressed as normalised power P, as functions of the perturbation position z along the coupling region. The coupling coefficient profile k(z) is also superimposed for better visualisation.

At the end of the first weakly-coupled region, the power is equally split between the "individual" waveguides 1 and 2 ($P_1=P_2$). The powers remain unchanged over the central uncoupled region and cross-couple completely at the end of second weakly-coupled region. The output power perturbation $\Delta P_1(L)$ (solid line) maps exactly this power evolution. It is shown that $\Delta P_1(L)$ reaches a maximum value when the perturbation reaches the end of the first weakly-coupled region and retains it over the entire uncoupled central region, where the power is split 50-50%. This complex coupled structure corresponds to a Mach-Zehnder interferometer (which may be considered as two serially connected couplers).

*PERTURBATIONS OF NON-IDEAL COUPLERS*

As already mentioned, in the presence of a finite detuning $\Delta\phi$ the perturbation power maxima are displaced from the actual 50-50% power points by an amount given by Equation (21) or Equation (22) depending on the nature of the phase detuning.

*Maintaining the coupler strength and varying the coupler length of a full cycle coupler*

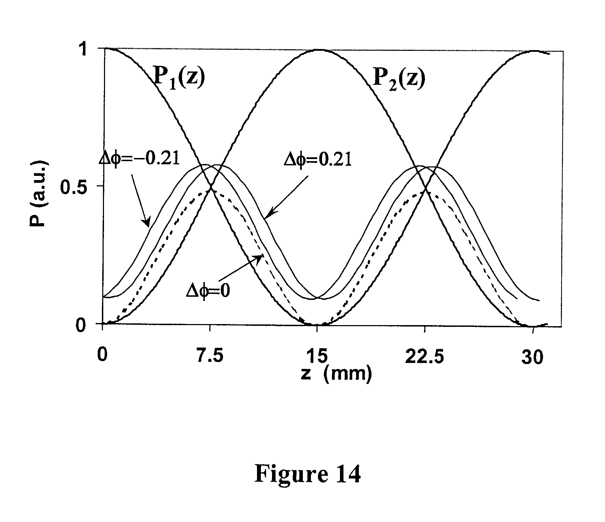

Figure 14 shows plots of the variation of normalised power P with perturbation position z along the coupling region for a simulation of the asymmetric perturbation of couplers with different phase displacements from the optimum point, $\Delta\phi_L=0$, the phase displacements being $\pm0.21$ ($\Delta\phi_p$ is considered 0). The coupling strength was kept constant and the phase displacement, $\Delta\phi_L$, was achieved by varying the coupler length by $\Delta L_{coupler}=\Delta\phi_L/\Delta\beta=\pm1.0$mm. The length of the ideal coupler ($\Delta\phi_L=0$) was L=30 mm and the coupling strength of all the couplers was $\Delta\beta=2\cdot\pi/L$. The cross-coupling coefficient remained constant, $k_{eo}\Delta z=0.22$ and $(k_{ee}-k_{oo})=0$. The perturbation powers are multiplied by a factor of 10.

The thick solid lines show the power evolution $P_1(z)$ and $P_2(z)$ in the "individual" waveguides along the coupler length. The dashed line shows the asymmetric perturbation of an ideal coupler ($\Delta\phi=0$), and the thin solid lines show the corresponding perturbations of the detuned couplers ($\Delta\phi_L=-0.21$ and $\Delta\phi_L=+0.21$. The shifts in the perturbation maxima from the ideal case (see equation 21) are evident. It is noted that with the negative phase displacement, both maxima shift towards the input end of the coupling region, whereas for the positive displacement both maxima shift towards the output end of the coupling region.

For a uniform $2\pi$ coupler with a coupling strength of $\Delta\beta=2\pi/L$ where L=30mm is the optimum coupler length and for a phase displacement of $\Delta\phi_L=\pm0.21$, the correction to the perturbation maxima positions, in order to obtain the 50-50% points of the coupler is given by Equation (21) as $\Delta L_{pert}=\frac{\Delta\phi\cdot L}{4\pi}\approx\pm0.5mm$.

*Varying the coupler strength and maintaining the coupler length of a full cycle coupler*

In the simulations of this form of phase detuning, the coupling length remained constant and the phase displacement, $\Delta\phi$, was achieved by varying the difference between the coupler eigenmodes by $\Delta\phi/L$. As already mentioned, this phase detuning occurs if a coupler is analysed at a wavelength different from its resonance wavelength.

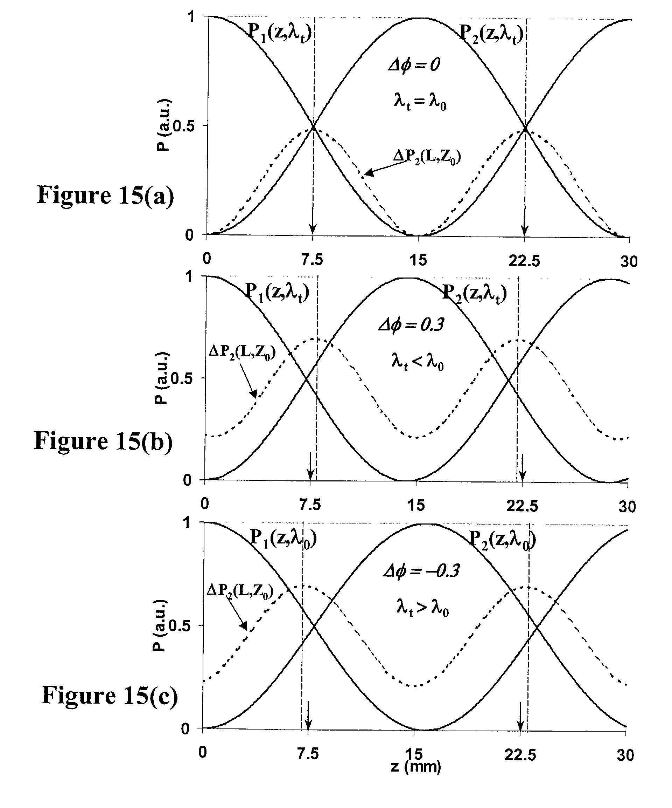

Figures 15(a), (b) and (c) show plots of the variation of normalised power P with perturbation position z along the coupling region for a simulation of the asymmetric perturbation of a uniform full cycle coupler analysed with different probe wavelengths. In these simulations the difference between the eigenmodes of an ideal coupler ($\Delta\phi=0$) was $\Delta\beta=2\cdot\pi/L$ and the difference between the eigenmodes of detuned couplers was $\Delta\beta'=(2\cdot\pi+\Delta\phi)/L$. The length of all couplers was L=30 mm, the cross-coupling coefficient remained constant so that $k_{eo}\Delta z=0.22$, and $k_{ee}-k_{oo}=0$. The perturbation powers are multiplied by a factor of 10.

Figure 15(a) shows the results of analysis of an ideal coupler ($\Delta\phi=0$) with a probe wavelength $\lambda_t$ equal to the resonance wavelength $\lambda_0$. As expected, the maxima of the perturbation power $\Delta P_2$ (dashed line) occur at the 50-50% points, where the powers $P_1$ and $P_2$ (solid lines) in the individual waveguides are equal. The vertical dashed lines correspond to the maxima positions, which are marked on the horizontal axis by arrows. This should be compared with Figures 15(b) and 15(c), which show the errors in the maxima position which arise from analysis at $\lambda_t\neq\lambda_0$. Figure 15 (b) relates to analysis at $\lambda_t<\lambda_0$, which gives a positive phase displacement ($\Delta\phi=0.3$), and Figure 15(c) relates to analysis at $\lambda_t>\lambda_0$, which gives a negative phase displacement ($\Delta\phi=-0.3$). In both graphs, the positions of the maxima in the perturbed power are shown by the vertical dashed lines, and the arrows on the horizontal axis mark the maxima positions for the ideal coupler of Figure 15(a), i.e. the actual 50-50% points of the coupler.

It can be seen from Figures 15(b) and 15(c) that for the cases of the detuned couplers, the positions of the asymmetric perturbation maxima differ from the actual 50-50% points of the ideal coupler, as marked by the arrows (which also differ from the 50-50% points of the detuned couplers). In accordance with Equation (22) the perturbation maxima in these cases are shifted inside ($\Delta\phi>0$) or outside ($\Delta\phi<0$) of the actual 50-50% points. Note the difference in behaviour here, where the maxima shift towards or away from one another, from that discussed above for a coupler length detuning, in which the maxima shift in the same direction. Both the magnitude and the direction of the shift should be correctly accounted for in order for the actual 50-50% points to be retrieved. It should also be stressed that in all cases the 0-100% point (given by the asymmetric perturbation minimum) remains fixed as predicted by Equation (23) of the theory.

For a uniform full cycle $2\pi$ coupler with a length L=30 mm, where $\Delta\beta=2\pi/L$ is the optimum coupling strength and for a phase displacement of $\Delta\phi=\pm0.3$, the correction to the perturbation maxima positions, in order to obtain the 50-50% points of the ideal coupler, are given by, $\Delta L_1 = \dfrac{\Delta\phi \cdot L}{4 \cdot (2\pi + \Delta\phi)}$ and $\Delta L_2 = + \dfrac{\Delta\phi \cdot L}{4 \cdot (2\pi + \Delta\phi)}$. It can be seen that the corrections are different for $\Delta\phi=+0.3$ ($\Delta L_1\approx-0.34$ mm and $\Delta L_2\approx+0.34$ mm) and $\Delta\phi=-0.3$ ($\Delta L_1\approx+0.38$ mm and $\Delta L_2\approx-0.38$ mm).

*Varying the coupler strength and maintaining the coupler length of a half-cycle coupler*

Similar modelling was carried out on a half-cycle coupler, in which the phase displacement was varied by altering the probe wavelength $\lambda_t$. In these simulations the difference between the eigenmodes of an ideal coupler ($\Delta_\phi=0$) was $\Delta\beta=\pi/L$ and the difference between the eigenmodes of detuned couplers was $\Delta\beta'=(\pi+\Delta\phi)/L$. The length of all couplers was L=30 mm, the cross-coupling coefficient remained constant so that $k_{eo}\Delta z=0.22$, and $(k_{ee}-k_{oo})=0$. The perturbation powers are multiplied by a factor of 10.

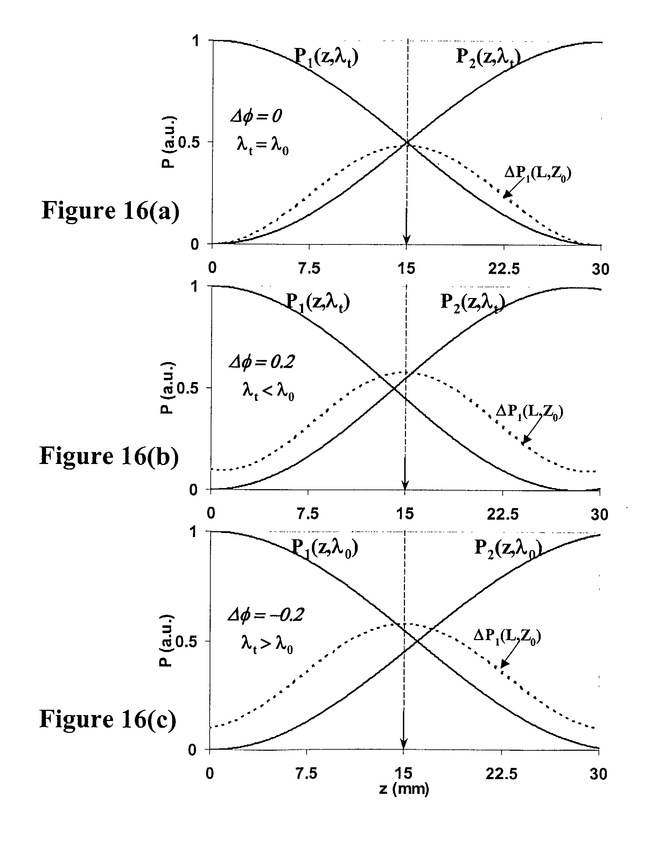

Figures 16(a), 16(b) and 16(c) shows the results of the simulations as plots of normalised power P against perturbation position along the coupling region z. In each case the solid lines show the power evolution in the individual waveguides, $P_1$ and $P_2$, and the dotted line shows the asymmetric perturbed power at the output of waveguide 1, $\Delta P_1$. The vertical dashed line marks the position of the perturbed power maxima in each case, and the arrow on the horizontal axis marks the actual 50-50% position of the ideal coupler.

Figure 16(a) shows the results for an ideal coupler ($\Delta\phi=0$) tested at the resonance wavelength ($\lambda_t=\lambda_0$). As expected, the vertical dashed line shows that the position of the asymmetric perturbation maximum coincides with the actual 50-50% point of the coupler as shown by the arrow.

Figures 16(b) and 16(c) show the results obtained for the same coupler tested at the wavelengths $\lambda_t<\lambda_0$ ($\Delta\phi=0.2$) and $\lambda_t>\lambda_0$ ($\Delta\phi=-0.2$) respectively. The vertical dashed lines indicate that the asymmetric perturbation maximum still coincide with the actual 50-50% point of the ideal coupler as marked by the arrows, as predicted by Equation 24 of the theory.

The correction to the position of the maximum of the asymmetric perturbation of a half-cycle coupler (given by Equation (24)) is zero and therefore it is a marker to the 50-50% point of the half-cycle coupler independently of the coupling strength of the coupler or equivalently, independently of the wavelength at which the coupler is analysed, as long as $\Delta\phi=<<\pi$.

*OUTPUT PHASE PERTURBATION*

It has been shown analytically that for a perfect coupler under pure asymmetric perturbation ($\Delta\phi=0$), the phase of the electric field at the output port with non-null power, as given by Equation (25), is proportional to the power in the corresponding "individual" waveguide at the point of the perturbation. Therefore, the output phase variation maps directly the power evolution along the corresponding "individual" waveguide.

The phase change owing to an asymmetric perturbation was simulated for an ideal uniform full-cycle coupler ($\Delta\phi_L=0$) by using Equation (12). The asymmetric cross-coupling coefficient was $k_{eo}\Delta z=0.07$ and the self-coupling coefficients were considered zero ($k_{ee} = k_{oo}=0$).

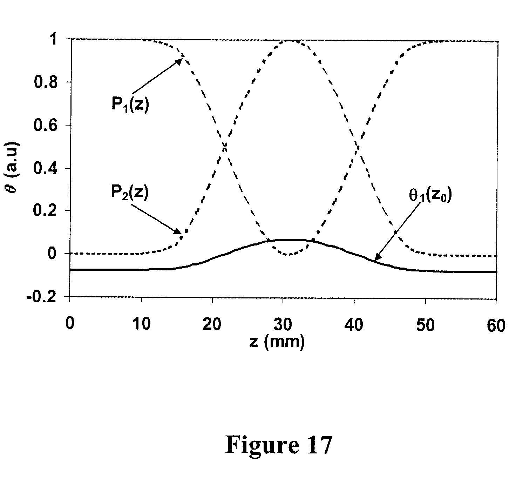

Figure 17 shows the results of the simulation, as a plot of phase variation $\theta$ against perturbation position along the coupling region z. The solid line in the phase variation $\theta_1$ at the output of waveguide 1, and the two dashed lines show the power evolutions $P_1$ and $P_2$ in the "individual" waveguides. These results indicate that the phase variation $\theta_1$ of the electric field at the output of the "individual" waveguide 1 follows closely the power evolution $P_1$ along the corresponding "individual" waveguide. Therefore, for an optimum full cycle coupler ($\Delta\phi_L=0$) with probe light launched into an input port of one of the waveguides, the coupling profile $k(z)$ can be obtained by measuring the output phase at the output port of the same waveguide. The output phase changes can be accurately measured by using any phase sensitive (interferometric) technique.

Thus the numerical simulations show that the methods of the present invention can be applied to a wide range of coupler geometries to successfully determine the 50-50% points the 0-100% points, the power distribution, the power evolution and the coupling profile.

The theoretical analysis and numerical modelling presented thus far has been presented in terms of both full-cycle couplers (in which the phase variation along the coupling region is from 0 to an even multiple of $\pi$) and half-cycle

couplers (in which the phase variation is from 0 to an odd multiple of $\pi$). In each case, all data, results and conclusions are equally applicable to both single cycle full-cycle couplers (0 to $2\pi$) and multiple cycle full-cycle couplers (0 to $4\pi$, $6\pi$, etc.), and to both single cycle half-cycle couplers (0 to $\pi$) and multiple cycle half-cycle couplers (0 to $3\pi$, $5\pi$, etc.). Also, other types of coupler can be analysed, such as quarter cycle couplers, in which the phase variation is from 0 to an odd multiple of $\pi/2$. In the case of quarter cycle couplers, these can be treated for analysis as half cycle couplers that are far from resonance.

EXPERIMENTAL RESULTS

A number of different experimental results have been obtained which verify the theory and numerical simulations. All results were obtained with an apparatus according to Figure 1. All couplers analysed were silica fibre couplers. The perturbations were induced by scanning the output of a $CO_2$ laser at 10.6 $\mu$m across the waists of the couplers. The technique proved to be stable, repeatable and accurate. In order to measure the perturbation, the $CO_2$ laser output was modulated and the power oscillations due to the perturbation were detected and amplified using a lock-in amplifier. The probe light was obtained from a (distributed feed-back) DFB laser diode generating 1.55 $\mu$m radiation, and was launched into port 1 of the coupler. Transmitted probe light arriving at port 3 and port 4 was detected and amplified using the lock-in amplifier. A mirror was mounted on a translation stage in order to scan the $CO_2$ laser output across the coupler waist. Symmetric perturbations were induced in the coupling region by shining the $CO_2$ laser beam perpendicularly to the plane of the two cores of the optical fibres comprising the coupler and perpendicularly to the optical axis of the coupling region. Asymmetric perturbations were accomplished by rotating the coupler by 90° around its longitudinal axis so that the $CO_2$ laser beam was parallel to the plane of the two cores and perpendicular to the optical axis of the coupling region.

Several experiments were performed. Three different couplers were fabricated and analysed using the perturbation method: a half-cycle coupler ($\phi(L)=\pi$), a full-cycle coupler ($\phi(L)=2\pi$) and a complex non-uniform coupler. The length of the coupling regions of the couplers was 30mm, with long transition regions making the total length of the fused regions approximately twice that. Both symmetric and asymmetric perturbations were used to analyse the couplers.

*Analysis of half-cycle coupler [$\phi(L)=\pi$]*

Single cycle half-cycle couplers transfer light from one waveguide to the other, so that light that is launched into port 1 exits at port 4. They have one point where the power is equally distributed in both waveguides, which should be localised in the centre of the coupler. Under asymmetric perturbation, the perturbed power will peak once at this 50-50% point.

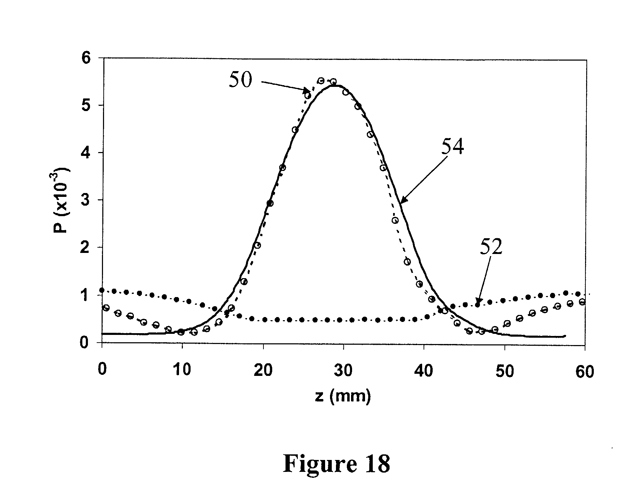

Figure 18 shows results of the analysis of a $\pi$ coupler, as plots of normalised power P against perturbation position z. The dotted line with open circles (labelled 50) shows the measured perturbed power resulting from an asymmetric perturbation. The dotted line with filled circles (labelled 52) shows the measured perturbed power resulting from a symmetric perturbation. The solid line (labelled 54) shows a theoretical fit of the asymmetric perturbation, obtained by normalising the measured symmetric perturbation to $\pi$ and using this as the coupling profile for the calculation. The fit of the asymmetric perturbation shows excellent agreement with the measured results.

The asymmetric perturbation follows the power distribution along the coupler, with the maximum marking the 50-50% point, and the symmetric perturbation follows the coupling profile. Although the symmetric perturbation follows the difference between the self-coupling perturbation coefficients, $k_{ee}-k_{oo}$, it will closely match the coupling profile, k(z) of the measured coupler, differing primarily in the tapered regions.

As discussed, the position of the maximum of the perturbed power due to an asymmetric perturbation is a marker for the 50-50% point of a half-cycle coupler independently of any small phase detuning of the coupler (either due to strain in the mounting of the coupler or analysis at a probe wavelength different from the coupler resonance wavelength). This information is very useful since the 50-50% points of half-cycle couplers can therefore be always obtained by using a normal laser diode to provide the probe light to analyse the coupler, without the need for a tunable laser set to the coupler exact resonance wavelength. Also, there is no need to calculate mathematical corrections. This was verified by measuring the asymmetrically perturbed power transmitted by a half-cycle coupler for three different probe wavelengths. A tunable laser was used to launch probe light into the coupler input port 1. Three different test wavelengths where used: $\lambda_1$=1510nm, $\lambda_2$=1550nm (coupler resonance wavelength) and $\lambda_3$=1590nm. The power of the $CO_2$ laser was kept the same for all the experiments (100mW through a 2mm pinhole).

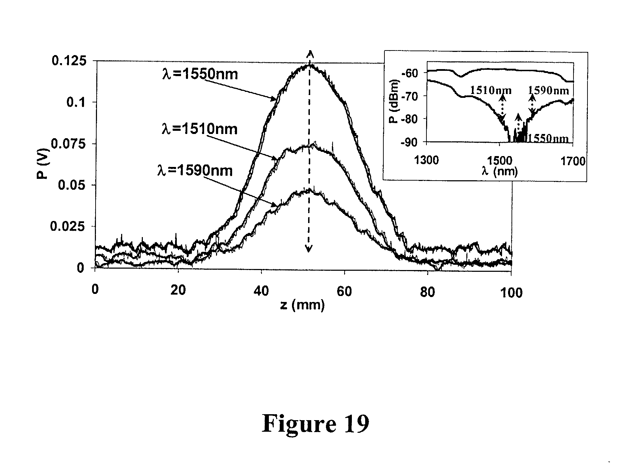

Figure 19 shows the results of this experiment, as plots of measured perturbed power P against perturbation position z. From Figure 19 it is evident that for a half-cycle coupler the position of the maximum of the power perturbation at output port 4 owing to an asymmetric perturbation of the coupler remains the same for different probe wavelengths. The difference in the magnitude of the perturbation at the different wavelengths is caused by differences in the tunable laser output power at the three wavelengths. The graph inset in Figure 19 is the measured spectral response (power P against wavelength $\lambda$) of the coupler, with the three probe wavelengths marked.

*Analysis of full-cycle coupler [$\phi(L)=2\pi$]*

As has been shown theoretically (see Figure 9), the asymmetric perturbation of a singel cycle full-cycle coupler has two maxima that correspond to the positions of the 50-50% power points of the coupler. A single cycle full-cycle coupler was fabricated and analysed using both a symmetric perturbation and an asymmetric perturbation.

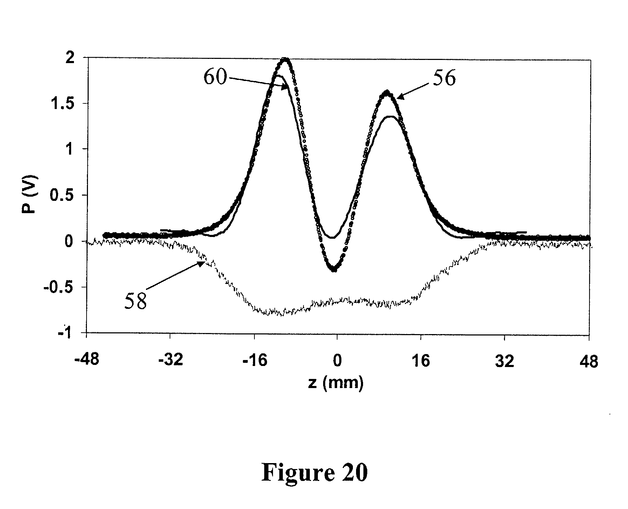

Figure 20 shows the result of the analysis, as plots of power P against perturbation position z. The open circles show the measured asymmetric perturbed power (labelled 56), the dashed line shows the measured symmetric perturbed power (labelled 58), and the solid line shows a theoretical fit for the perturbed power (labelled 60). As for the case of the half-cycle coupler, the coupling profile obtained from the symmetric perturbation was used to obtain the theoretical fit for the asymmetric perturbation response. The asymmetric perturbation was fitted assuming a linear variation of 5% in the asymmetric coupling coefficient from waist end to waist end. The mean value was taken to be $k_{eo} = 2.3 \times 10^{-4}$ $\mu m^{-1}$.

The experimental and theoretical results are in good agreement. The symmetric perturbation resulted in a very weak signal, which was therefore noisy after amplification. As expected, the experimental asymmetric perturbation has two peaks in the power of the perturbation. However, there is a slight difference in the height of the two peaks, which is accompanied by a corresponding variation in the symmetric perturbation signal. This could be caused by a small variation of the coupler waist outer diameter, or a slight twist in the coupler waist. A small misalignment between the coupler waist and the scanning $CO_2$ laser could also produce similar anomalies.

A $2\pi$ full-cycle coupler was analysed using different $CO_2$ laser powers. This was done to demonstrate the theory (illustrated in Figure 8) that a low level of asymmetric perturbation gives a perturbed power that follows the coupling profile, and a high level of asymmetric perturbation gives a perturbed power that follows the power distribution. The laser output powers used were 30mW, 42mW and 96mW. The actual power that illuminated the fibre was much lower, given approximately by the ratio of outer waist diameter ($\approx 30\mu m$) over the unfocused laser spot size ($\approx 4mm$), which is $\approx 7.5 \times 10^{-3}$. To reduce the spot size of the $CO_2$ laser and increase the resolution of the method, a 1 mm aperture was used, which reduced the power hitting the coupler to $1.87 \times 10^{-3}$ of the output power.

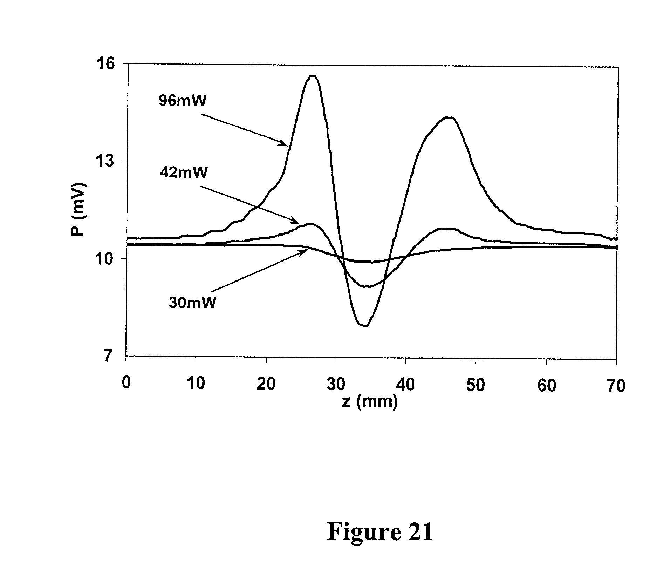

Figure 21 shows the results of this experiment, as plots of perturbed power P against perturbation position z. The measured asymmetric perturbed power for each $CO_2$ laser output power is shown. For a $CO_2$ laser power of 30mW, the asymmetric perturbation seems to follow the coupling profile of the structure and no maxima (50-50% points) are observed. This situation corresponds to Region I in Figure 8. By increasing the power to 42mW, an intermediate response is observed, where two perturbation maxima begin to appear, as predicted. Also, the coupling profile effect is stronger due to the increase of the ($k_{ee}$-$k_{oo}$) coefficient. At this power level, the magnitude of the coefficients ($k_{ee}$-$k_{oo}$) and $k_{eo}^2$ is comparable (corresponding to Region II of Figure 8). For a larger power of the $CO_2$ laser (96mW), the $k_{eo}$ coefficient is predominant and the power distribution in the coupler is followed (corresponding to Region III of Figure 8). The required correction to the positions of the 50-50% points of the coupler in relation to the maxima of the observed asymmetric perturbation, caused by a phase detuning of the coupler and the ($k_{ee}$-$k_{oo}$) coefficient, can be determined by Equation (22).

From Figure 21 it is observed that when using an asymmetric perturbation, there is a threshold in the $CO_2$ laser power above which the power distribution of the coupler can be mapped and the 50-50% positions identified. Below this threshold, the coupling profile can be mapped instead. Therefore, a coupler can be fully analysed with asymmetric perturbation, without the need to use symmetric perturbation. To achieve this, the analysis can comprise monitoring the transmitted probe light for an asymmetric perturbation induced by a first perturbation power and then monitoring the transmitted probe light for an asymmetric perturbation induced by a second perturbation power, where one of the powers is above the threshold and the other is below the threshold. This can be advantageous if the analysing apparatus is such that it is more straightforward to modify the incident power of the perturbing radiation than to alter the relative positions of the coupler and the perturbing radiation to induce a symmetric perturbation.

*Analysis of a complex non-uniform half-cycle coupler*

A complex non-uniform coupler with three interaction regions each having a length of 10 mm, was fabricated using a flame brush technique. The theoretical coupling profile of the coupler was similar to that shown in Figure 13. However, the actual coupler had transition taper region between each of the three interaction regions, and the width of the burner flame (approximately 4 mm) used in fabrication influenced the shape of the real structure, tending to average out the coupling profile. Both symmetric and asymmetric perturbations were carried out in the analysis of this coupler.

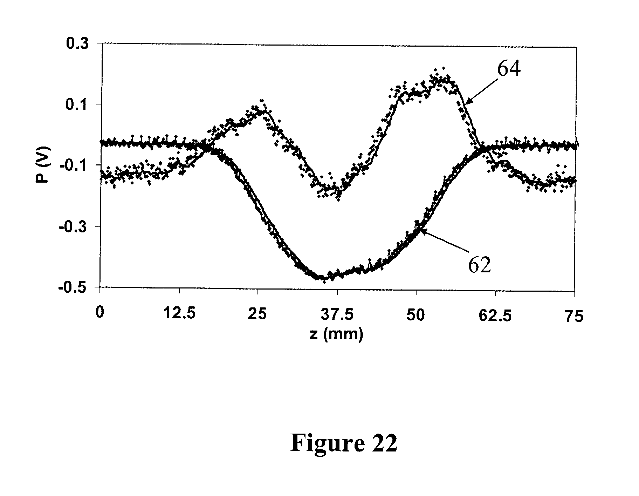

Figure 22 shows the results of the analysis, as plots of perturbed power P against perturbation position z.

The asymmetric perturbed power is labelled 62, and the symmetric perturbed power is labelled 64. In each case, the points represent measured results, and the solid line is a theoretical fit to the results. The power oscillations caused by the symmetric perturbation were very weak, giving a relatively noisy signal. However, the results for the symmetric perturbation follow the coupling profile of the theoretical structure, with two coupling regions and a region with low coupling strength between them. Distortion of the measured profile may be caused (i) by averaging of the ideal profile by the size of the burner flame, (ii) by noise while analysing the coupler, and (iii) by any tilt in the $CO_2$ laser position along the coupler. The asymmetric perturbation was achieved by rotating the fibre coupler about its longitudinal axis by 90° from its position during symmetric perturbation. The asymmetric results shows an increase of the perturbation until the uncoupled region is reached and then a decrease in the second coupling region. The slight tilt in the perturbation is probably due to a change in $k_{eo}$ along the coupler. However, when compared to the theoretical fits, the experimental data are in very good agreement.

CONCLUSIONS

The experimental results fully verify the numerical simulations and theoretical derivations presented herein, and indicate the usefulness of the claimed methods. In particular, the methods provide a non-destructive technique for analysing a wide variety of waveguide couplers. The methods permit, among other things:

- Mapping of the coupling profile by inducement of a symmetric perturbation and measurement of the transmitted power. This gives information about the uniformity of coupler waist and of the shape of any taper regions;
- Mapping of the power evolution along an individual waveguide by inducement of an asymmetric perturbation and measurement of the phase of the transmitted light;
- Determination of features of the power distribution by inducement of an asymmetric perturbation and measurement of the transmitted power;
- Location of the 50-50% and 0-100% points in a single or multiple full-cycle coupler, with the application of corrections if the coupler has been analysed with a detuning phase displacement;
- Location of the 50-50% point in a half-cycle coupler, which is independent of the probe wavelength used and hence does not require a tunable probe source or the application of any corrections;
- Full analysis by combining asymmetric and symmetric perturbations; and
- Full analysis by inducing asymmetric perturbations at different powers of incident perturbing radiation

Although experimental results have been presented for only some types of coupler, the numerical simulations demonstrate that the method can be applied more widely. Indeed, the method is suitable for the analysis of couplers of many geometries and types, including fibre couplers and planar waveguide couplers, uniform and non-uniform couplers, full and half-cycle couplers, multicycle couplers, and also couplers comprising more than two individual waveguides.

**REFERENCES**

[1] Y. Bourbin, A. Enard, M. Papuchon, K. Thyagarajan. "The local absorption technique: A straightforward characterisation method for many optical devices", *Journal of Lightwave Technology*, **LT-5**(5), pp684-687, 1987.
[2] H. Gnewuch, J.E. Roman, M. Hempstead, J.S. Wilkinson, R. Ulrich, "Beat length measurement in directional couplers by thermo-optic modulation", *Optics Letters,* **21**(15), pp. 1189-1191, 1996.

**Claims**

1. A method of analysing a waveguide coupler having a coupling region with axial length and comprising first and second waveguides extending side-by-side, the method comprising:

   introducing probe light into the coupler;
   providing a source of perturbing radiation having a direction of incidence onto the coupling region;
   generating a temperature gradient across the coupling region by arranging the first and second waveguides in line with the direction of incidence of the perturbing radiation, thereby to perturb the coupling region asymmetrically;
   monitoring the probe light transmitted by the coupler; and

repeating the generating and monitoring steps for a sequence of axial length portions of the coupling region.

2. A method according to claim 1, wherein the transmitted probe light has a power which is monitored during the monitoring step.

3. A method according to claim 2, wherein the monitoring of the power of the transmitted probe light includes noting at which axial length portion or portions the power has a maximum and/or a minimum value.

4. A method according to claim 3, and further comprising applying a correction to an axial position of the noted axial length portion or portions in the event that the coupler is a single- or multiple-cycle full-cycle coupler and the analysis is carried out under conditions in which the coupler is detuned from ideal operation.

5. A method according to claim 4, in which the detuning arises from distortion of the axial length of the coupling region.

6. A method according to claim 4, in which the detuning arises from the probe light having a wavelength which differs from a wavelength at which ideal operation of the coupler is defined.

7. A method according to claim 1, wherein the transmitted probe light has a phase which is monitored during the monitoring step.

8. A method of analysing a waveguide coupler having a coupling region with axial length and comprising first and second waveguides extending side-by-side, the method comprising:

   introducing probe light into the coupler;
   providing a source of perturbing radiation having a direction of incidence onto the coupling region;
   generating a temperature gradient across the coupling region by arranging the first and second waveguides crossways to the direction of incidence of the perturbing radiation and exposing the first and second waveguides together to the perturbing radiation, thereby to perturb the coupling region symmetrically;
   monitoring the probe light transmitted by the coupler; and
   repeating the generating and monitoring steps for a sequence of axial length portions of the coupling region.

9. A method according to claim 8, wherein the transmitted probe light has a power which is monitored during the monitoring step.

10. A method according to any one of claims 1 to 9, wherein the perturbing radiation comprises electromagnetic radiation.

11. A method according to claim 10, wherein the source is a laser.

12. A method according to claim 10 or 11, wherein the electromagnetic radiation has a wavelength selected to have an absorption length in the coupling region of between 0.1 and 7 times a distance equal to half of the coupling region width.

13. A method according to claim 12, wherein the waveguide coupler is an optical fibre waveguide coupler with a coupling region having a radius which comprises the distance equal to half of the coupling region width.

14. A method according to any one of claims 11 to 13, wherein the coupling region is made from a material comprising silica and the source is a carbon dioxide laser.

15. A method according to any one of claims 1 to 9, wherein the perturbing radiation comprises heat radiation.

16. A method according to claim 15, wherein the source is a resistively heated element.

17. A method of analysing a waveguide coupler having a coupling region with axial length and comprising first and second waveguides extending side-by-side, the method comprising:

   introducing probe light into the coupler;
   providing a source of perturbing radiation;

selecting a first direction from which to present the coupling region to the perturbing radiation;

presenting the coupling region to the perturbing radiation;

monitoring the probe light transmitted by the coupler;

repeating the presenting and monitoring steps for a sequence of axial length portions of the coupling region;

selecting a second direction from which to present the coupling region to the perturbing radiation; and

repeating the presenting and monitoring steps for a sequence of axial length portions of the coupling region;

wherein presenting the coupling region from one of the first direction and the second direction exposes the first waveguide prior to the second waveguide so as to generate a temperature gradient across the coupling region, thereby to perturb the coupling region asymmetrically, and presenting the coupling region from the other of the first direction and the second direction exposes the first and second waveguides together so as to generate a temperature gradient across the coupling region, thereby to perturb the coupling region symmetrically.

**18.** A method of analysing a waveguide coupler having a coupling region with axial length and comprising first and second waveguides extending side-by-side, the method comprising:

introducing probe light into the coupler;

providing a source of perturbing radiation;

setting the perturbing radiation to a first power;

presenting the coupling region to the perturbing radiation from a direction that exposes the first waveguide prior to the second waveguide so as to generate a temperature gradient across the coupling region, thereby to perturb the coupling region asymmetrically;

monitoring the probe light transmitted by the coupler;

repeating the presenting and monitoring steps for a sequence of axial length portions of the coupling region;

setting the perturbing radiation to a second power different from the first power; and

repeating the presenting and monitoring steps for a sequence of axial length portions of the coupling region.

**19.** Apparatus for analysing a waveguide coupler, comprising:

a source of probe light operable to emit probe light for introducing into a waveguide coupler;

a mount for holding a waveguide coupler;

a source of perturbing radiation operable to direct light radiation having a component of at least 2μm in wavelength onto a waveguide coupler held in the mount with a direction of incidence;

a scanning arrangement operable to present a sequence of axial length portions of the coupling region of a waveguide coupler held in the mount to the perturbing radiation; and

a detector operable to monitor probe light transmitted by a waveguide coupler held in the mount.

**20.** Apparatus according to claim 19, wherein the mount and/or the light source allows a waveguide coupler held in the mount to be rotated relative to the direction of incidence of the perturbing radiation.

**21.** Apparatus according to claim 19 or 20, wherein the source of perturbing radiation has a component of at least 3, 4, 5, 6, 7, 8, 9 or 10 μm in wavelength.

**Amended claims in accordance with Rule 86(2) EPC.**

**1.** A method of analysing a waveguide coupler having a coupling region with axial length and comprising first and second waveguides extending side-by-side, the method comprising:

introducing probe light into the coupler;

providing a source of perturbing radiation having a direction of incidence onto the coupling region;

generating a temperature gradient across the coupling region by arranging the first and second waveguides in line with the direction of incidence of the perturbing radiation, thereby to perturb the coupling region asymmetrically and non-destructively;

monitoring the probe light transmitted by the coupler; and

repeating the generating and monitoring steps for a sequence of axial length portions of the coupling region.

**2.** A method according to claim 1, wherein the transmitted probe light has a power which is monitored during the monitoring step.

**3.** A method according to claim 2, wherein the monitoring of the power of the transmitted probe light includes noting at which axial length portion or portions the power has a maximum and/or a minimum value.

**4.** A method according to claim 3, and further comprising applying a correction to an axial position of the noted axial length portion or portions in the event that the coupler is a single- or multiple-cycle full-cycle coupler and the analysis is carried out under conditions in which the coupler is detuned from ideal operation.

**5.** A method according to claim 4, in which the detuning arises from distortion of the axial length of the coupling region.

**6.** A method according to claim 4, in which the detuning arises from the probe light having a wavelength which differs from a wavelength at which ideal operation of the coupler is defined.

**7.** A method according to claim 1, wherein the transmitted probe light has a phase which is monitored during the monitoring step.

**8.** A method of analysing a waveguide coupler having a coupling region with axial length and comprising first and second waveguides extending side-by-side, the method comprising:

introducing probe light into the coupler;
providing a source of perturbing radiation having a direction of incidence onto the coupling region;
generating a temperature gradient across the coupling region by arranging the first and second waveguides crossways to the direction of incidence of the perturbing radiation and exposing the first and second waveguides together to the perturbing radiation, thereby to perturb the coupling region symmetrically and non-destructively;
monitoring the probe light transmitted by the coupler; and
repeating the generating and monitoring steps for a sequence of axial length portions of the coupling region.

**9.** A method according to claim 8, wherein the transmitted probe light has a power which is monitored during the monitoring step.

**10.** A method according to any one of claims 1 to 9, wherein the perturbing radiation comprises electromagnetic radiation.

**11.** A method according to claim 10, wherein the source is a laser.

selecting a second direction from which to present the coupling region to the perturbing radiation; and
repeating the presenting and monitoring steps for a sequence of axial length portions of the coupling region;

wherein presenting the coupling region from one of the first direction and the second direction exposes the first waveguide prior to the second waveguide so as to generate a temperature gradient across the coupling region, thereby to perturb the coupling region asymmetrically and non-destructively, and presenting the coupling region from the other of the first direction and the second direction exposes the first and second waveguides together so as to generate a temperature gradient across the coupling region, thereby to perturb the coupling region symmetrically and non-destructively.

**18.** A method of analysing a waveguide coupler having a coupling region with axial length and comprising first and second waveguides extending side-by-side, the method comprising:

introducing probe light into the coupler;
providing a source of perturbing radiation;
setting the perturbing radiation to a first power;
presenting the coupling region to the perturbing radiation from a direction that exposes the first waveguide prior to the second waveguide so as to generate a temperature gradient across the coupling region, thereby to perturb the coupling region asymmetrically and non-destructively;
monitoring the probe light transmitted by the coupler;

repeating the presenting and monitoring steps for a sequence of axial length portions of the coupling region;

setting the perturbing radiation to a second power different from the first power; and

repeating the presenting and monitoring steps for a sequence of axial length portions of the coupling region.

**Figure 1**

**Figure 2**

40

P$_1$  1  48  3  P$_3$ + ΔP$_3$

**Figure 3(a)**

46

P$_4$ + ΔP$_4$

2  4

46

Asymmetric configuration

**Figure 3(b)**

Symmetric configuration

**Figure 4**

**Figure 5**

**Figure 6**

Figure 7

**Figure 8**

Figure 9

**Figure 10**

**Figure 11**

**Figure 12**

**Figure 13**

Figure 14

Figure 15(a)

Figure 15(b)

Figure 15(c)

Figure 16(a)

Figure 16(b)

Figure 16(c)

**Figure 17**

**Figure 18**

**Figure 19**

**Figure 20**

**Figure 21**

**Figure 22**

## EUROPEAN SEARCH REPORT

European Patent
Office

Application Number

EP 01 30 6893

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 4 763 272 A (M.N. MCLANDRICH) 9 August 1988 (1988-08-09) <br> * abstract * <br> * column 5, line 22 - line 24 * <br> * column 5, line 38 - column 6, line 25 * <br> * column 11, line 17 - line 27; figures * | 1,2, 8-11, 15-18 | G01M11/00 |
| X | US 6 112 555 A (C. BLOOM) 5 September 2000 (2000-09-05) <br> * abstract * <br> * column 5, line 33 - column 6, line 39; figures * | 8-11,15, 16 | |
| A,D | GNEWUCH H ET AL: "BEAT-LENGTH MEASUREMENT IN DIRECTIONAL COUPLERS BY THERMO-OPTIC MODULATION" OPTICS LETTERS, OPTICAL SOCIETY OF AMERICA, WASHINGTON, US, vol. 21, no. 15, 1 August 1996 (1996-08-01), pages 1189-1191, XP000622114 ISSN: 0146-9592 * page 1191, column 1, last paragraph * | 1,8, 17-19 | TECHNICAL FIELDS SEARCHED (Int.Cl.7) <br> G01M <br> G02B |
| A | PATENT ABSTRACTS OF JAPAN vol. 016, no. 003 (P-1294), 7 January 1992 (1992-01-07) & JP 03 225251 A (SUMITOMO ELECTRIC IND LTD), 4 October 1991 (1991-10-04) * abstract * | 1,8, 17-19 | |

The present search report has been drawn up for all claims

| Place of search | Date of completion of the search | Examiner |
|---|---|---|
| THE HAGUE | 11 January 2002 | VAN ASSCHE P.O. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent
Office

**Application Number**

EP 01 30 6893

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☒ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

| European Patent Office | LACK OF UNITY OF INVENTION SHEET B | Application Number EP 01 30 6893 |

The Search Division considers that the present European patent application does not comply with the requirements of unity of invention and relates to several inventions or groups of inventions, namely:

1. Claims: 1-21

   Method of and apparatus for analysing a waveguide coupler.

   1.1. Claims: 1-7
   Method of analysing a waveguide coupler by injecting radiation perpendicular to the coupler and in the plane of the coupler.

   1.2. Claims: 8-16
   Method of analysing a waveguide coupler by injecting radiation perpendicular to the coupler and perpendicular to the plane of the coupler.

   1.3. Claim : 17
   Method of analysing a waveguide coupler by injecting radiation perpendicular to the coupler, firstly in the plane of said coupler and secondly perpendicular to this plane.

   1.4. Claim : 18
   Method of analysing a waveguide coupler by injecting radiation perpendicular to the coupling and in the plane of said coupling. Measurements are performed with said radiation at a first power and with said radiation at a second power.

   1.5. Claims: 19-21
   Apparatus for analysing a waveguide coupler using a source of perturbing radiation of at least 2 micrometer in wavelength.

Please note that all inventions mentioned under item 1, although not necessarily linked by a common inventive concept, could be searched without effort justifying an additional fee.

## ANNEX TO THE EUROPEAN SEARCH REPORT
## ON EUROPEAN PATENT APPLICATION NO.

EP 01 30 6893

This annex lists the patent family members relating to the patent documents cited in the above-mentioned European search report.
The members are as contained in the European Patent Office EDP file on
The European Patent Office is in no way liable for these particulars which are merely given for the purpose of information.

11-01-2002

| Patent document cited in search report | Publication date | Patent family member(s) | Publication date |
|---|---|---|---|
| US 4763272 A | 09-08-1988 | NONE | |
| US 6112555 A | 05-09-2000 | US 5948134 A | 07-09-1999 |
| | | US 6018965 A | 01-02-2000 |
| | | AU 4415397 A | 17-04-1998 |
| | | EP 0928432 A | 14-07-1999 |
| | | JP 2000514208 T | 24-10-2000 |
| | | WO 9813711 A | 02-04-1998 |
| | | US 5931983 A | 03-08-1999 |
| JP 03225251 A | 04-10-1991 | NONE | |

EPO FORM P0459

For more details about this annex : see Official Journal of the European Patent Office, No. 12/82